# EUROPÄISCHE PATENTSCHRIFT

(11) **EP 2 885 158 B1**
(45) Veröffentlichungstag und Bekanntmachung des Hinweises auf die Patenterteilung: **17.02.2016**
(21) Anmeldenummer: 13783240.8
(22) Anmeldetag: 08.08.2013
(51) Int. Cl.: B60P 1/64, B61D 3/20, B61D 47/00

(54) **TRANSPORT- UND VERLADESYSTEM FÜR SCHIENENGESTÜTZTE GEFÄHRTE**
TRANSPORT AND LOADING SYSTEM FOR RAIL-BASED VEHICLES
SYSTÈME DE TRANSPORT ET DE CHARGEMENT POUR VÉHICULES FERROVIAIRES

(30) Priorität: 14.08.2012 DE 102012107455
(43) Veröffentlichungstag der Anmeldung: 24.06.2015
(73) Patentinhaber: Luddeneit, Michael, 07768 Hummelshain (DE); Scherf, Wilfried, 07768 Hummelshain (DE)
(72) Erfinder: Luddeneit, Michael, 07768 Hummelshain (DE); Scherf, Wilfried, 07768 Hummelshain (DE)
(74) Vertreter: Freitag, Joachim
(86) Internationale Anmeldenummer: PCT/DE2013/100285
(87) Internationale Veröffentlichungsnummer: WO 2014/026673

(56) Entgegenhaltungen:
- WO-A1-90/01007
- DE-U1- 9 214 306
- DE-U1- 29 914 122
- US-A- 3 163 127
- US-A1- 2010 191 615

## Beschreibung

Die Erfindung betrifft ein Transport- und Verladesystem für schienengestützte Gefährte bei Nutzung von Transportfahrzeugen, die mit einer auf standardisierten ISO-Containerabmessungen basierenden Ladeplattform und mit standardisierten Verrieglungselementen ausgestattet sind, wobei das Transport- und Verladesystem mindestens einen rechteckigen Rahmen in Form einer Bodengruppe im ISO-Containerformat mit zwei langen und zwei kurzen Seiten und vier ISO-Containerecken sowie eine Auf- und Abladeeinheit, die über wenigstens eine kurze Seite des rechteckigen Rahmens hinaus eine Verladung von Gütern ermöglicht, enthält, insbesondere zum Transportieren und Verladen beweglicher Maschinen, die für Prüfungs- und Instandhaltungsarbeiten von Gleisanlagen eingesetzt werden.

Maschinen zur Prüfung und Instandhaltung von Gleisanlagen müssen transportabel sein, da deren Einsatz an definierten Streckenabschnitten entsprechend der erteilten Aufträge und/oder Genehmigungen, an vielen unterschiedlichen Orten eines weit verzweigten Gleisnetzes - und möglicherweise sogar weltweit - kurzfristig und deshalb ohne nennenswerten eigenen Fahrbetrieb der Vermessungs- und Bearbeitungsmaschinen erfolgen sollte.

Um die Prüfungs- und Instandhaltungsmaschinen transportabel zu gestalten, kann man entweder spezialisierte gleisgestützte Sonderfahrzeuge einsetzen, die mehrere Maschinen in sich vereinen und sich mit eigener Kraft fortbewegen, oder angepasste Trägerfahrzeuge verwenden, die einen Lade- und Transportvorgang der Prüfungs- und Instandhaltungsmaschinen ermöglichen.

Ein Nachteil solcher Systeme ist ein erhöhter technischer Aufwand bei der betriebs- und arbeitstechnischen Anpassung der Maschinen an die unterschiedlichsten urbanen Bahnnetze, wie beispielsweise von Eisenbahnen, Straßenbahnen oder U-Bahnen bzw. national unterschiedlichen Gleisnetzen bei einem weltweiten Einsatz der Maschinen. Aufgrund der Größe der Maschinen ist der Einsatz von Sonderfahrzeugen oder angepassten Trägerfahrzeugen nur ökonomisch, wenn die Einsatzorte mit einem vertretbaren Zeitaufwand erreichbar sind und Maßnahmen zur Anpassung der Spurweite und zum Absetzen der Maschinen auf unterschiedliche Gleisanlagen einfach realisierbar sind. Bei einem weltweiten Einsatz kommt hinzu, dass für einen Transport keine Standardlösung, wie beispielsweise Container verfügbar sind, um den logistischen Aufwand möglichst gering zu halten und, beispielsweise bei einem Transport auf dem Seeweg, einen ausreichenden Schutz vor Umwelteinflüssen zu erreichen.

Es besteht deshalb der Bedarf, Prüfungs- und Instandhaltungsmaschinen für Gleisanlagen in Form von kleineren, flexibel anpassbaren und modularen Einzeleinheiten zu gestalten, um diese einfacher von einem Einsatzort zum nächsten transportieren zu können und dafür auch die üblichen Transportmittel, wie LKW oder Standard-Eisenbahnwaggon zurückgreifen zu können.

Eine Möglichkeit, gleisgestützte Prüfungs- und Instandhaltungsmaschinen unmittelbar zu einem Einsatzort zu bringen, stellt die Zuführung auf Eisenbahnwaggons dar.

Im Stand der Technik ist aus der DE 10 2004 026 916 A1 eine Vorrichtung zum Durchführen von Baumaßnahmen in einem Gleisbereich bekannt. Der Transport von für die Baumaßnahmen erforderlichen Baustoffe erfolgt hier durch schienengestützte Arbeitsmaschinen auf mehreren, zu einem Zug zusammengekoppelten Drehgestell-Flachwaggons. Damit die schienengestützten Arbeitsmaschinen auf den Waggons auch über die Länge des Zuges Baumaterialien bewegen können, wird am Einsatzort eine zusammenhängende Gleisstrecke über die Ladeflächen der Waggons montiert. Das Auf- und Abladen von Baustoffen erfolgt über die Stirnseiten des ersten und/oder des letzten Flachwaggons mittels Arbeitsmaschinen, die entweder auf den Waggons oder auf der von den Waggons befahrenen Gleisanlage stationiert sind. Ein Auf- und Abladen der Arbeitsmaschinen ist jedoch nicht vorgesehen oder beschrieben.

Für den Transport kleinerer Einzeleinheiten sind insbesondere weltweit standardisierte Verladesysteme bekannt, die ohne zusätzlichen Aufwand mit der verfügbaren Infrastruktur gehandhabt werden können und die eine einfache und unmittelbare Zuführung von Prüfungs- und Instandhaltungsmaschinen an den Einsatzort gewährleisten.

Eine besonders einfache und flexible Handhabung von zu transportierenden Stückgütern ermöglichen Transporteinheiten die auf Elementen von standardisierten ISO-Container basieren. In der Gebrauchsmusterschrift DE 92 14 306 U1 ist eine transportable Ladeplattform mit einer den ISO-Containern entsprechenden Grundfläche offenbart, die eine ebene und damit vielseitig nutzbare Ladefläche aufweist. An den vier Ecken der Ladefläche sind Container-Ecken angebracht. Auf den Container-Ecken der Ladefläche sind vier gleichlange senkrecht stehenden Pfosten befestigt, zwischen denen an den Längsseiten der Ladefläche Längsträger zur Versteifung vorgesehen sind. Die oberen Enden der Pfosten weisen ebenfalls Container-Ecken auf, wodurch mehrere Ladeplattformen übereinander stapelbar sind. Durch die Container-Ecken und die Abmessungen wird die Handhabung und der Transport der Ladeplattform mit allen Mitteln die auch für ISO-Containern eingesetzt werden ermöglicht. Die beiden kurzen Seiten der Plattform verfügen über eine an der Ladefläche angeschlagene Klappe, die von einer senkrechten zu einer waagerechten Position bewegt werden kann. In der senkrechten (eingeklappten) Position verschließt die Klappe die stirnseitigen Öffnungen der Ladeplattform, in der waagerechten (ausgeklappten) Position kann die Klappe als verlängerte Ladefläche genutzt werden, die an den beiden seitlichen Klappenenden mit Ketten entsprechender Länge an den Pfosten eingehangen sind. Die Längen der Klappen sind so gewählt, dass ein zwischen zwei Eisenbahnwaggons vorhandener Abstand mit den Klappen zweier hintereinander folgender Ladeplattformen überbrückt werden kann und eine befahrbare Ladebrücke entsteht. Bei einer ebenerdig abgestellten Ladeplattform kann die Klappe auch als Auffahrrampe verwendet werden, indem sie bis auf den Boden aufliegend heruntergeklappt wird. Zum Auf- und Absetzen und zum geschützten Transport von Prüfungs- und Instandhaltungsmaschinen ist die transportable Ladeplattform gemäß DE 92 14 306 U1 jedoch nicht geeignet. Es sind keine Möglichkeiten zur Überwindung des Höhenunterschieds zwischen der Ladeplattform und einem Gleis, um schienengestützte Gefährte direkt absetzen zu können, und kein Schutz vor Umwelteinflüssen vorhanden..

Der Erfindung liegt die Aufgabe zugrunde, eine neuartige Möglichkeit zum Transportieren und Verladen schienengestützter Gefährte, insbesondere beweglicher Prüfungs- und Instandhaltungsmaschinen zu finden, die es unter Nutzung von Transportfahrzeugen mit einer für ISO-Containerabmessungen standardisierten Ladeplattform gestattet, die schienengestützten Gefährte auf einfache und sichere Art und Weise zu beliebig weit entfernten Einsatzorten zu transportieren und an einem Einsatzort unmittelbar auf einer Gleisanlage einzugleisen oder von dieser wieder aufzunehmen, ohne dass Spezialfahrzeuge für den Transport und fremde Hebezeuge zum Auf- und Absetzen erforderlich sind.

Erfindungsgemäß wird die Aufgabe bei einem Transport- und Verladesystem für Transportfahrzeuge, die mit einer auf standardisierten ISO-Containerabmessungen basierenden Ladeplattform und mit standardisierten Verrieglungselementen ausgestattet sind, enthaltend mindestens einen rechteckigen Rahmen in Form einer Bodengruppe im ISO-Containerformat mit zwei langen und zwei kurzen Seiten und vier ISO-Containerecken und eine Auf- und Abladeeinheit, die über wenigstens eine kurze Seite des rechteckigen Rahmens hinaus eine Verladung von Gütern ermöglicht, dadurch gelöst, dass das Transport- und Verladesystem einen aus mindestens zwei Bodengruppen im ISO-Containerformat spiegelverkehrt zusammengesetzten Sandwich-Aufbau enthält, wobei die den Rahmen und eine Grundplatte aufweisenden Bodengruppen mit direkt übereinander angeordneten Containerecken starr verbunden sind, dass ein Zwischenraum zwischen den beiden verbundenen Bodengruppen des Sandwich-Aufbaus vorhanden ist, in dem Antriebs-, Übertragungs- und Steuerungseinheiten zum automatisierten Bewegen der Auf- und Abladeeinheit angeordnet sind, und dass Schienen zum Halten und Führen schienengestützter Gefährte auf einer oben liegenden Grundplatte des Sandwich-Aufbaus in Längsrichtung des Rahmens vorhanden und parallel zueinander ausgerichtet sind.

Vorteilhaft ist die Auf- und Abladeeinheit als eine in dem Zwischenraum zwischen den beiden verbundenen Bodengruppen angeordnete lineare Ausschubeinrichtung ausgebildet, die wenigstens zwei parallel zu den Längsseiten der rechteckigen Rahmen teleskopartig ausfahrbare Linearführungen mit mindestens einem symmetrisch und parallel dazu angeordneten Linearantrieb aufweist und an mindestens einer der kurzen Seiten der beiden Rahmen des Sandwich-Aufbaus eine Stützstruktur aus oberer Grundplatte des Sandwich-Aufbaus und einer die Ausschubeinrichtung abschließenden Abschlussplatte bildet.

Dabei ist es von Vorteil, wenn die Ausschubeinrichtung vier Linearführungen und zwei Linearantriebe aufweist, wobei die Linearantriebe zwischen jeweils zwischen zwei paarweise angeordneten Linearführungen angeordnet sind.

Zweckmäßig ist ein Brückenelement, das zum Überbrücken eines bei ausgefahrener Ausschubeinrichtung entstehenden offenen Bereichs und zum Verlängern mindestens der durch die Schienen auf der Grundplatte der Sandwich-Anordnung erzeugten Führung für schienengestützte Gefährte vorgesehen ist, an der aus Grundplatte und Abschlussplatte gebildeten Stützstruktur fixierbar angeordnet ist.

Dabei kann das Brückenelement als eine beim Ausfahren der Ausschubeinrichtung auf der Stützstruktur befestigtes, teleskopisch ausfahrbares Schienenpaar ausgeführt sein oder es ist als einzeln in Nuten einlegbare Schienenabschnitte ausgebildet. Eine weitere Ausführung des Brückenelements besteht darin, dass es als eine nach dem Ausfahren der Ausschubeinrichtung auf die Stützstruktur auflegbare Brückenplatte ausgeführt ist.

Es erweist sich als eine besonders vorteilhafte Weiterbildung des Sandwich-Aufbaus mit ausfahrbarer Ausschubeinrichtung, wenn zusätzlich eine faltbare Rampe, die einen klappbaren Rampenabschnitt und einen faltbaren Rampenabschnitt aufweist, an der Abschlussplatte der Ausschubeinrichtung befestigt und als eine Schräge ausklappbar ist, mit der ein Höhenunterschied zwischen der Grundplatte des Sandwich-Aufbaus und dem Bodenniveau, auf dem das den Sandwich-Aufbau befördernde Transportfahrzeug steht, so überbrückt ist, dass schienengestützte Gefährte auf- und abrollbar sind.

Vorteilhaft ist dabei eine vertikal bewegliche Höhenverstellung für die faltbare Rampe an der Abschlussplatte der Ausschubeinrichtung angeordnet, sodass ein mit der oberen Grundplatte des Sandwich-Aufbaus übereinstimmendes Anschlussniveau der Rampe an das Niveau einer inneren Bodenfläche eines auf dem Sandwich-Aufbau aufgesetzten ISO-Containers anpassbar ist.

Zweckmäßig besteht die faltbare Rampe aus zwei separaten parallel ausgerichteten und mit Schienen belegten Spurabschnitten, die synchron miteinander beweglich sind und jeweils so breit angelegt sind, dass sie die Schienen für die schienengestützten Gefährte aufnehmen können, wenn diese noch an unterschiedliche Spurweiten angepasst werden müssen.

Bei den parallelen Spurabschnitten der faltbaren Rampe erweist es sich als vorteilhaft, dass darauf jeweils Schwenklager für schwenkbare Schienenabschnitte an einem oberen Ende des faltbaren Rampenabschnitts der Rampe angebracht sind, wobei die Schwenklager nahezu mittig an den parallelen Spurabschnitten des faltbaren Rampenabschnitts angeordnet sind, sodass die Schienenabschnitte seitlich über die Oberfläche des faltbaren Rampenabschnitts schwenkbar sind und bei ausgeklappter Rampe an einen Kurvenverlauf einer Gleisanlage anpassbare Schienenenden ausbilden. Dabei weisen die schwenkbaren Schienenabschnitte zweckmäßig Schienenverlängerungen auf, die über ein Klappgelenk in einer senkrechten Ebene auf die Gleisanlage ausklappbar sind, um den Übergang vom faltbaren Rampenabschnitt auf die Schienen der Gleisanlage zu verbessern oder um bei vorgegebenen Neigungswinkel der Rampe einen eventuellen Höhenunterschied zu überbrücken. Dabei sind die Schienenverlängerungen vorzugsweise je nach zu überwindendem Höhenunterschied zwischen der Grundplatte des Sandwich-Aufbaus oder der inneren Bodenplatte eines aufgesetzten Containers und dem Bodenniveau der Gleisanlage für das Transportfahrzeug in der Länge anpassbar.

Zweckmäßig weisen die Schienenverlängerungen unmittelbar auf der Gleisanlage aufliegende Enden auf, die mit Mitteln zur Führung der Schienenverlängerungen und der schwenkbaren Schienenabschnitte an den Schienen der Gleisanlage versehen sind. Die Mittel zur Führung sind dabei vorzugsweise als beidseitig an den Schienen wirkende U-förmige Anschläge oder einseitige spiegelsymmetrisch zueinander in der Gleisanlage angeordnete L-förmige Anschläge ausgebildet.

Bei mit einer faltbaren Rampe erweiterter Ausführung des Sandwich-Aufbaus ist es vorteilhaft, wenn diese an mindestens jeweils einem Ende der klappbaren und faltbaren Rampenabschnitte ausklappbare Stützen aufweist. Dabei sind die ausklappbaren Stützen vorzugsweise am Klappgelenk der Rampe nahe der Abschlussplatte des Sandwich-Aufbaus und/oder am Klappgelenk der Schienenverlängerung ausklappbar angebracht.

Eine weitere vorteilhafte Weiterbildung des erfindungsgemäßen Sandwich-Aufbaus besteht darin, dass ein Teleskopausleger als Auf- und Abladeeinheit auf der oberen Grundplatte des Sandwich-Aufbaus angeordnet ist, wobei der Teleskopausleger zwei Teleskoparme und zwei Linearantriebe aufweist, die jeweils parallel an den langen Seiten des rechteckigen Rahmens des Sandwich-Aufbaus angeordnet sind.

Diese Ausführung kann vorzugsweise noch dadurch verbessert werden, dass mindestens ein Teil der oberen Bodengruppe des Sandwich-Aufbaus drehbar um eine senkrechte Rotationsachse gelagert ist, wobei der drehbare Teil den als Auf- und Abladeeinheit vorgesehenen Teleskopausleger aufweist, wodurch auch ein seitliches Absetzen der schienengestützten Gefährte z.B. auf ein Nebengleis möglich ist.

Eine weitere zweckmäßige Weiterbildung der Erfindung wird dadurch erreicht, dass ein Tragegestell als Auf- und Abladeeinheit auf der oberen Grundplatte des Sandwich-Aufbaus longitudinal beweglich angeordnet ist, wobei das Tragegestell entlang der Längsseiten des Sandwich-Aufbaus in Führungsprofilen über die gesamte Länge des Sandwich-Aufbaus beweglich ist, um das schienengestützte Gefährt über dem Gleis absetzen oder von dort aufnehmen zu können.

Dazu ist eine vorzuziehende Ausführung so gestaltet, dass an dem Tragegestell eine Parallelogramm-Anordnung aus Linearantrieben, verbunden mit einer Absetzbox zur Aufnahme des schienengestützten Gefährts, beweglich angeordnet ist, sodass eine Bewegung zum Auf- und Abladen der Absetzbox aus jeweils einem horizontalen und einem vertikalen Auf- und Abladeschritt zusammengesetzt ist.

Ein besonders vorteilhaft gestaltetes modulares Transport- und Verladesystem gemäß der Erfindung beseht darin, dass bei einem zur Verfügung stehenden Transportfahrzeug mit drei ISO-Container-Stellplätzen der Sandwich-Aufbau an einem hinteren Ende, ein zur Aufnahme von schiengestützten Gefährten modifizierter ISO-Container (als Verwahrungs-Container) mittig und ein zur Versorgung des Sandwich-Aufbaus modifizierter ISO-Container (als Versorgungs-Container) an einem vorderen Ende der Ladeplattform des Transportfahrzeugs angeordnet sind. Stehen für das modulare Transport- und Verladesystem gemäß der Erfindung auf einem Transportfahrzeug nur zwei ISO-Container-Stellplätzen zur Verfügung, so werden der Sandwich-Aufbau an einem hinteren Ende, ein zur Aufnahme von schiengestützten Gefährten modifizierter ISO-Container (als Verwahrungs-Container) auf dem Sandwich-Aufbau aufgesetzt und ein zur Versorgung des Sandwich-Aufbaus modifizierter ISO-Container (Versorgungs-Container) vor den Sandwich-Aufbau auf der Ladeplattform des Transportfahrzeugs angeordnet und verriegelt.

Mit der vorliegenden Erfindung ist es möglich, ein neuartiges Transport- und Verladesystem für schienengestützte Gefährte, insbesondere für bewegliche Prüfungs- und Instandhaltungsmaschinen für Gleisanlagen, unter Nutzung von Transportfahrzeugen, die mit einer auf standardisierten ISO-Containerabmessungen basierenden Ladeplattform und mit standardisierten Verrieglungselementen ausgestattet sind, zu realisieren, mit dem die schienengestützten Gefährte auf einfache und sichere Art und Weise zu beliebig weit entfernten Einsatzorten transportiert und an einem Einsatzort unmittelbar auf einer Gleisanlage eingegleist oder von dieser wieder aufgenommen werden können, ohne dass Spezialfahrzeuge für den Transport und fremde Hebezeuge zum Auf- und Absetzen erforderlich sind.

Nachfolgend soll die Erfindung anhand von Ausführungsbeispielen näher erläutert werden. In den dazugehörigen Zeichnungen zeigen:
- Fig. 1:: eine verkürzte perspektivische Ansicht eines auf einem Fahrzeug abgestellten Transport- und Verladesystems mit einem Sandwich-Aufbau;
- Fig. 2:: eine perspektivische Darstellung der faltbaren Auffahrrampe in einer Ladestellung;
- Fig. 3a:: den Bewegungsbereich der seitlich schwenkbaren Schienenabschnitte auf dem faltbaren Rampenabschnitt der Auffahrrampe in einer Draufsicht;
- Fig. 3b:: Aufnahme einer Schiene des schwenkbaren Schienenabschnitts an einem Schwenkgelenk in einer perspektivische Ansicht;
- Fig. 4a:: eine Seitenansicht der in Ladestellung befindlichen Auffahrrampe in einer unteren Position auf dem Niveau der Oberseite des Sandwich-Aufbaus;
- Fig. 4b:: vergrößerte Ansicht von Fig. 4a;
- Fig. 5a:: eine Seitenansicht der in Ladestellung befindlichen Auffahrrampe in einer oberen Position auf dem Niveau der Bodenfläche eines auf dem Sandwich-Aufbau abgestellten ISO-Containers;
- Fig. 5b:: vergrößerte Ansicht von Fig. 5a;
- Fig. 6a:: eine perspektivische Darstellung des mittels U-Profil am Gleis geführten schwenkbaren Schienenabschnitts mit kurzen Stützen
- Fig. 6b:: eine perspektivische Detailansicht einer das Ende des faltbaren Rampenabschnitts umfassenden Lasche und der daran befestigten kurzen Stütze
- Fig. 6c:: eine Seitenansicht der Lasche und der daran befestigten kurzen Stütze mit U-Profil
- Fig. 7a:: eine Darstellung eines mittels U-Profil am Gleis geführten schwenkbaren Schienenabschnitts
- Fig. 7b:: eine Darstellung eines mittels Anschlag am Gleis geführten schwenkbaren Schienenabschnitts
- Fig. 8:: eine perspektivische Ansicht eines auf einem Schienenfahrzeug abgestellten Transport- und Verladesystems mit aufgesetztem ISO-Container und der in einer Transportstellung befindlichen Auffahrrampe;
- Fig. 9:: eine Anordnung des Sandwich-Aufbaus auf einem Fahrzeug mit aufgesetzten ISO-Containern
- Fig. 10:: eine Anordnung des Sandwich-Aufbaus auf einem Fahrzeug mit davor abgestellten ISO-Containern
- Fig. 11:: eine Ausgestaltung der ISO-Container mit seitlichen Wartungsöffnungen
- Fig. 12:: eine Ausgestaltung des Sandwich-Aufbaus mit drehbaren Teleskopausleger als Auf- und Abladeeinheit
- Fig. 13:: eine Ausgestaltung des Sandwich-Aufbaus mit mobilen Traggestell als Auf- und Abladeeinheit.

Das Verlade- und Transportsystem soll bevorzugt für schienengestützte Gefährte 47, wie beispielsweise Arbeitsmaschinen oder Mess- und Prüfgeräte verwendet werden, die vorzugsweise mittels Eisenbahn transportiert werden sollen und dafür in ISO-Containern 4 verstaut, auf Fahrzeugen 5 mit einer auf standardisierten ISO-Containerabmessungen basierenden Ladeplattform 51 aufgeladen und mit geeigneten Verrieglungselementen 53 gesichert werden können. Dabei sollen die schiengestützte Gefährte 47 auf Gleisanlagen 7 abgesetzt oder von Gleisanlagen 7 aufgenommen werden können. Ebenso kann das Verlade- und Transportsystem aber auch auf beliebigen anderen Fahrzeugen 5, die über eine solche Ladeplattform 51 verfügen verwendet werden und ist auch für die Verladung und den Transport anderer, nicht schienengestützter Stückgüter geeignet. Für diesen Zweck geeignete Verrieglungselemente 53, z. B. sog. Twist-lock-Elemente, werden beispielsweise von der Firma JOST Werke GmbH angeboten.

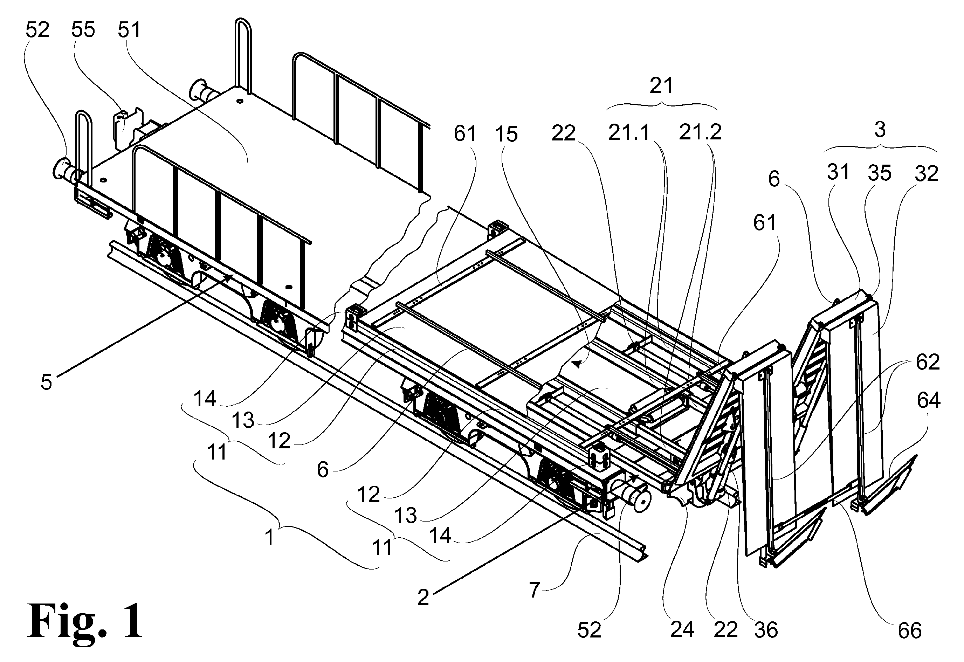

Wie in **Fig. 1** gezeigt, weist das Verlade- und Transportsystem als Kernstück einen waagerecht orientierten Sandwich-Aufbau 1 aus mindestens zwei Bodengruppen 11 im ISO-Containerformat, die jeweils in Form eines rechteckigen Rahmens 12 mit zwei langen und zwei kurzen Seiten und einer Grundplatte 13. Jede der Bodengruppen 11 weist an den vier Ecken eine standardisierte Containerecke 14 auf. Die direkt übereinander angeordneten Bodengruppen 11 sind über die Containerecken 14 starr miteinander verbunden. Die Containerecken 14 ermöglichen es, den Sandwich-Aufbau 1 zwischen anderen Transportsystemen im ISO-Containerformat, zwischen anderen ISO-Containern oder auf einer Ladeplattform 51 von für den ISO-Containertransport geeigneten Transportfahrzeugen 5 zu stapeln und ihn mittels der für Containerecken 14 ausgelegten Verrieglungselemente 53 fest mit dem Transportfahrzeug 5 oder anderen ISO-Containern zu verbinden.

In **Fig. 1** ist der Sandwich-Aufbau 1 aus zwei Bodengruppen 11 von 20 Fuß-ISO-Containern zusammengesetzt, wobei auf eine Bodengruppe 11 eine weitere Bodengruppe 11 spiegelverkehrt aufgesetzt ist, sodass die Containerecken 14 der beiden Bodengruppen 11 unmittelbar übereinander angeordnet sind und die ursprünglich unten befindliche Grundplatte 13 der spiegelverkehrt aufgesetzten Bodengruppe 11 somit zu einer Oberseite des Sandwich-Aufbaus 1 wird. Mittels der starren Verbindung zwischen den sich unmittelbar gegenüberstehenden Containerecken 14 bilden die beiden Bodengruppen 11 damit zusammen den Sandwich-Aufbau 1. Zwischen den beiden verbundenen Bodengruppen 11 ist ein Zwischenraum 15 ausgebildet, der für den Einbau von Antriebs-, Übertragungs- und Steuereinheiten einer den Funktionsumfang des Sandwich-Aufbaus 1 erweiternden Auf- und Abladeeinheit zur Verfügung steht. Die Höhe des Zwischenraums 13 ist bei der Herstellung des Sandwich-Aufbaus 1 durch eine Anpassung der sich unmittelbar gegenüberstehenden Containerecke 14 möglich. Die minimale Höhe des Zwischenraums 15 wird erreicht, wenn die Containerecken 14 einer Bodengruppe 11 in deren Höhe halbiert werden. Eine Vergrößerung des Zwischenraums 15 ist nach Bedarf ebenfalls möglich, indem Abstandshalter zwischen den Containerecken 14 eingesetzt werden.

Für das Auf- und Abladen von schienengestützten Gefährten 47 sind auf der oberen Grundplatte 13 des Sandwich-Aufbaus 1 Schienen 6 angeordnet. Da die Schienen 6 auf der Grundplatte 13 aufliegen und maximal die Gewichtskraft der zu transportierenden schienengestützten Gefährte 47 aufnehmen müssen, ist es ausreichend, Profile (beispielsweise Vierkant-Profile oder Doppel-T-Profile) zu verwenden, auf denen die schienengestützten Gefährte 47 beispielsweise durch Scheibenräder mit Spurkränzen geführt werden können. Das Höhenniveau der die schienengestützten Gefährte 47 aufnehmenden Oberseite der Schienen 6 liegt unter dem Höhenniveau der zur Grundplatte 13 gehörenden Containerecken 14, sodass ein ISO-Container 4 auf dem Sandwich-Aufbau 1 aufsetzbar ist, ohne die Schienen 6 zu beschädigen.

Die Spurweite der Schienen 6 ist je nach der Spurweite der zu transportierenden schienengestützten Gefährte 47 anpassbar. Zur Einstellung der Spurweite sind die Schienen 6 mit einer lösbaren Schraubverbindung an einer Spurweitenverstellung 61 montiert, die fest mit der Grundplatte 13 verbunden ist. Zum Einstellen der Spurweite weist die Spurweitenverstellung 61 eine Vielzahl von Gewindebohrungen auf. Die Spurweitenverstellungen 61 sind in Form von Flacheisen ausgeführt, die orthogonal zu den Schienen 6, in gleichmäßigen Abständen am Anfang, am Ende und in der Mitte der Grundplatte 13 befestigt sind.

In einem ersten Ausführungsbeispiel des Sandwich-Aufbaus 1 wird als Auf- und Abladeeinheit eine Ausschubeinrichtung 2 in den Zwischenraum 15 eingesetzt, die den Sandwich-Aufbau 1 parallel zu einer der kurzen Seiten, in horizontaler Richtung über die Begrenzung des Sandwich-Aufbaus 1 hinaus verlängerbar macht. Diese in **Fig. 1** gezeigte Ausführung ist dafür konzipiert, dass als das den Sandwich-Aufbau 1 befördernde Transportfahrzeug 5 ein Eisenbahn-Flachwaggon zum Einsatz kommt. Wird der Sandwich-Aufbau 1 mit der Ausschubeinrichtung 2 an einem mit einer Kupplung 55 und zwei Puffern 52 versehenen Ende des Transportfahrzeugs 5 auf der ebenen Ladeplattform 51 abgestellt, ist die Ausschubeinrichtung 2 als Verlängerung der Grundplatte 13 nutzbar, wodurch die Puffer 52 und die Kupplung 55 des Fahrzeug 5 überbrückbar sind und eine Verbindung zu einer auf gleicher Höhe befindlichen Laderampe oder zu einem weiteren auf einem gegenüberstehenden Transportfahrzeug 5 stehenden Sandwich-Aufbau 1 mit Ausschubeinrichtung 2 hergestellt werden kann.

Die Ausschubeinrichtung 2 ist im vorliegenden Beispiel aus vier Linearführungen 21, zwei Linearantrieben 22 und einer Abschlussplatte 24 aufgebaut. Es ist aber auch eine Ausschubeinrichtung 2 mit nur zwei Linearführungen 21 und einem Linearantrieb. 22 realisierbar. Die Linearführungen 21 werden aus teleskopartig ineinander geschobenen Hohlprofilen gebildet, bei denen sich ein inneres Hohlprofil 21.2 gleitend und linear geführt in einem äußeren Hohlprofil 21.1 bewegt. Das äußere Hohlprofil 21.1 ist innerhalb des Zwischenraums 15 fest mit dem Sandwich-Aufbau 1 verbunden. In einer eingefahrenen Position der Ausschubeinrichtung 2 sind die inneren Hohlprofile 21.2 nahezu vollständig in die äußeren Hohlprofile 21.1 eingeschoben. Beim Bewegen der Ausschubeinrichtung 2 in eine ausgefahrene Position werden die inneren Hohlprofile 21.2 aus den äußeren Hohlprofilen 21.1 heraus geschoben. Als ein gemeinsamer Abschluss der Linearführungen 21 sind alle freien Enden der inneren Hohlprofile 21.2 mit der vertikal ausgerichteten und parallel zur kurzen Seite des Sandwich-Aufbaus 1 angeordneten Abschlussplatte 24 verbunden.

Die vier Linearführungen 21 sind parallel zu den Längsseiten des Sandwich-Aufbaus 1 angeordnet, wobei jeweils zwei Linearführungen 21 zu einem angetriebenen Paar zusammengefasst sind. Die Bewegung der Linearführungen 21 erfolgt mit den zwei Linearantrieben 22, die in Form von Fluid-Zylindern jeweils mittig und parallel zwischen den ein Paar bildenden Linearführungen 21 angeordnet sind. Ein Paar aus Linearführungen 21 ist dabei jeweils fest mit einer der Längsseiten des Sandwich-Aufbaus 1 verbunden. Die Linearantriebe 22 sind in deren Bewegungsrichtung einerseits fest mit dem Sandwich-Aufbau 1 und andererseits über die inneren Hohlprofile 21.2 mit der zu bewegenden Abschlussplatte 24 verbunden.

Es ist auch möglich, andere Linearantriebe 22 als die beschriebenen Fluid-Zylinder einzusetzen. Die Bewegung der Ausschubeinrichtung 2 kann auch mit mechanischen Elementen wie Spindelantrieben, Kettenantrieben oder Seilzügen in Verbindung mit einem Elektromotor oder mit elektromagnetisch arbeitenden Linearmotoren erfolgen.

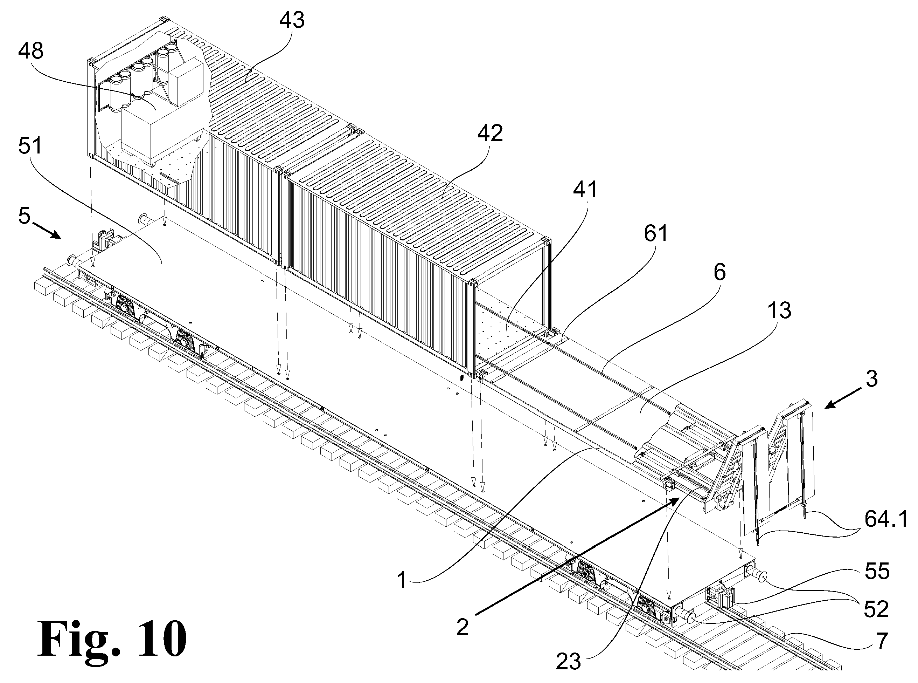

Die Versorgung der Linearantriebe 22 erfolgt über eine extern an den Sandwich-Aufbau 1 anzuschließende Versorgungseinrichtung 48 (nur in Fig. 10 dargestellt). Diese stellt die für den Betrieb von Fluid-Zylindern erforderlichen Medien und Betriebdrücke bzw. die für den Betrieb von Elektroantrieben erforderliche elektrische Energie bereit. Für den Anschluss der Versorgungseinrichtung 48 ist an dem der Ausschubeinrichtung 2 gegenüberliegenden Ende des Sandwich-Aufbaus 1 eine Koppelstelle (nicht dargestellt) integriert. An der Koppelstelle werden alle erforderlichen Versorgungsleitungen, die für den Betrieb des Sandwich-Aufbaus 1 erforderlich sind, über Leitungsanschlüsse in Form von Schnellverbindern nach außen geführt. Je nach Ausgestaltung und Funktionsumfang des Sandwich-Aufbaus 1 führen von der Koppelstelle aus die im inneren des Sandwich-Aufbaus 1 verlegten Versorgungsleitungen bis zu den Linearantrieben 22 bzw. zu weiteren Verbrauchern. Damit der Aufwand für die Versorgung möglichst gering gehalten werden kann, basieren alle Antriebe der Sandwich-Aufbauten 1 vorteilhafter Weise auf dem gleichen Antriebskonzept.

In einer speziellen Ausführung wird der Sandwich-Aufbau 1 ohne einen erweiterten Funktionsumfang aufgebaut. Ein solcher Sandwich-Aufbau 1 dient dann ausschließlich zum Erreichen einer erhöhten Abstellposition für einen darauf aufgesetzten ISO-Container 4. Der Sandwich-Aufbau 1 ohne erweiterten Funktionsumfang verfügt an beiden Enden einer der Längsseiten seitlich über Koppelstellen zur Versorgungseinheit. Über die beiden Koppelstellen werden die Versorgungsleitungen im Inneren des Sandwich-Aufbaus 1 durch diesen hindurch geschleift, sodass beispielsweise an einem Ende des Sandwich-Aufbaus 1 die Versorgungseinrichtung 48 und an dem anderen Ende der Sandwich-Aufbau 1 mit Ausschubeinrichtung 2 zu einem modularen Transport- und Verladesystem zusammengeschlossen werden kann. Für die Verbindung zwischen den Koppelstellen der benachbart abgestellten Module werden wie oben beschrieben lösbare Verbindungsleitungen verwendet.

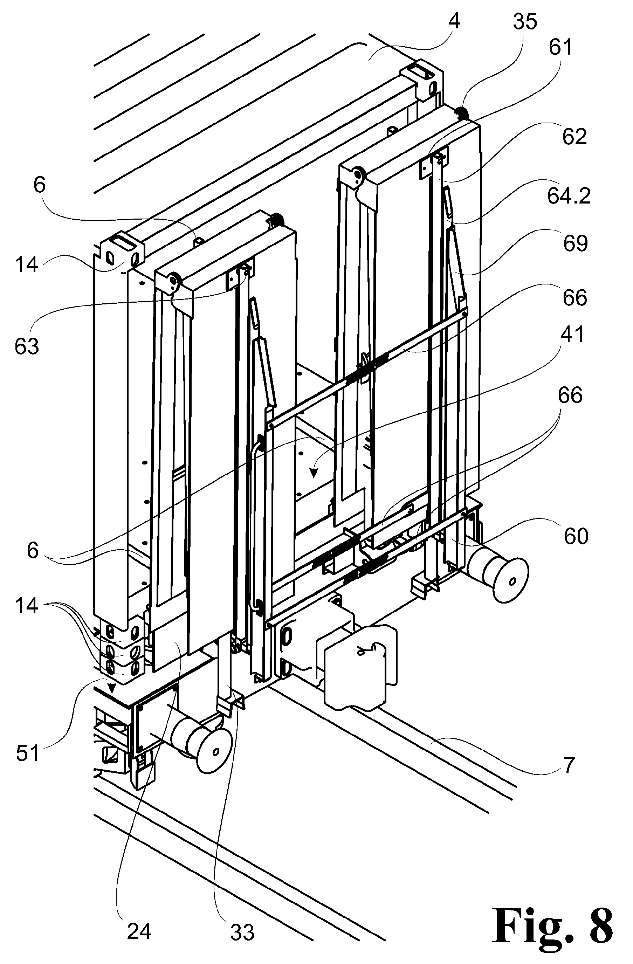

In der eingefahrenen Position befindet sich die Abschlussplatte 24 in unmittelbarer Nähe zur kurzen Seite des Sandwich-Aufbaus 1, sodass die Öffnung zum Zwischenraum 15 von der Abschlussplatte 24 abdeckt wird. Die eingefahrene Position ist nur in der **Fig. 8** abgebildet.

In der ausgefahrenen Position befindet sich die Abschlussplatte 24, durch die maximale Ausfahrlänge der Linearführungen 21 und den Arbeitsbereich der Linearantriebe 22 begrenzt, in einer über die Begrenzung des Sandwich-Aufbaus 1 hinausgehenden Position, wobei durch den Rand der Grundplatte 13 und durch die Abschlussplatte 24 eine Stützstruktur gebildet wird, auf der Schienenbrücken 23 zur Überbrückung des ansonsten offenen Bereichs zwischen dem Sandwich-Aufbau 1 und der Abschlussplatte 24 aufgenommen werden können. In einer vorteilhaften Ausführung sind die Schienenbrücken 23 bereits in die Schienen 6 auf der Oberseite 12 integriert und werden bei der Bewegung der Ausschubeinrichtung 2 in die ausgefahrene Position teleskopisch aus den auf der Oberseite 12 angebrachten Schienen 6 ausgezogen. Die Schienenbrücken 23 können aber auch von Hand ausklappbar mittels eines Gelenks an den Schienen 6 der Oberseite 12 befestigt sein oder getrennt von den Schienen 6 der Grundplatte 13 in Nuten von Hand eingelegt werden.

Für den Fall, dass keine Schienenbrücken 23 verwendet werden, ist es auch möglich eine den offenen Bereich zwischen dem Sandwich-Aufbau 1 und der Abschlussplatte 24 mit einer Brückenplatte (nicht dargestellt) abzudecken, die ebenfalls von Hand aufgelegt wird.

Je nach Länge und vorgesehener Belastung der Ausschubeinrichtung 2 können auch mehr oder weniger als vier Linearführungen 21 und zwei Linearantriebe 22 verwendet werden. In der einfachsten Ausgestaltung werden nur zwei parallel und symmetrisch zu den Längsseiten des Sandwich-Aufbaus 1 angeordnete Linearführungen 21 mit einem einzelnen mittig dazwischen angeordneten Linearantrieb 22 verbaut. In dieser Ausgestaltung besteht auch die Möglichkeit den Sandwich-Aufbau 1 an beiden kurzen Seiten mit einer Ausschubeinrichtung 2 auszurüsten.

Eine bevorzugte Möglichkeit zur Erweiterung des Funktionsumfangs des Sandwich-Aufbaus 1 besteht darin, die Ausschubeinrichtung 2 zusätzlich mit einer ausklappbaren Rampe 3 zu ergänzen. Die Rampe 3 überbrückt einen Höhenunterschied zwischen der Grundplatte 13 und einem Bodenniveau, auf dem der Sandwich-Aufbau 1 selbst oder das den Sandwich-Aufbau 1 transportierende Transportfahrzeug 5 steht. Bei Verwendung des Eisenbahn-Flachwaggons als Transportfahrzeug 5 wird das Bodenniveau durch die Gleisanlage 7 gebildet. Aufgrund des relativ großen Höhenunterschieds zwischen dem auf dem Transportfahrzeug 5 abgestellten Sandwich-Aufbau 1 und dem Niveau der Gleisanlage 7 wird die Rampe 3 vorzugsweise als eine zweiteilige faltbare Rampe 3 ausgelegt, die ein mittiges Knickgelenk 35 aufweist, an dem sich die Rampe 3 in einen klappbaren Rampenabschnitt 31 und in einen faltbaren Rampenabschnitt 32 aufteilt. Derartige faltbare Rampen 3 werden beispielsweise vom belgischen Hersteller DHOLLANDIA oder von der niederländischen ROYAL NOOTEBOOM GROUP B.V. angeboten.

Die faltbare Rampe 3 wird mit dem klappbaren Rampenabschnitt 31 an der Abschlussplatte 24 der Ausschubeinrichtung 2, um eine horizontale Achse klappbar aufgenommen und weist an der nicht mit dem Knickgelenk 35 verbundenen Seite des faltbaren Rampenabschnitts 32 ein freies Ende auf. **Fig. 1** zeigt die faltbare Rampe 3 in einer Zwischenstellung zwischen einer vollständig eingeklappten Transportstellung, bei der sich der klappbare Rampenabschnitt 31 und der faltbaren Rampenabschnitt 32 parallel zueinander in einer senkrechten Position zur Grundplatte 13 befinden würden, und einer vollständig ausgeklappten Ladestellung, bei der die Rampe 3 die Verbindung zwischen Grundplatte 13 und dem Bodenniveau der Gleisanlage 7 herstellt.

Zur Durchführung einer kombinierten Klapp- und Faltbewegung wird die faltbare Rampe 3 ebenfalls mit einem Linearantrieb 22 angetrieben, der den klappbaren Rampenabschnitt 31 bewegt. Mittels einer aus Koppelstangen 36 gebildeten Mechanik werden die Antriebskräfte des Linearantriebs 22 auch auf den faltbaren Rampenabschnitt 32 übertragen, sodass dieser gleichzeitig mit der Klappbewegung des klappbaren Rampenabschnitts 31 entfaltet wird. Die Versorgung der zur Bewegung der Rampe 3 erforderlichen Linearantriebe 22 erfolgt wie bei der Ausschubeinrichtung 2 über die externe Versorgungseinheit.

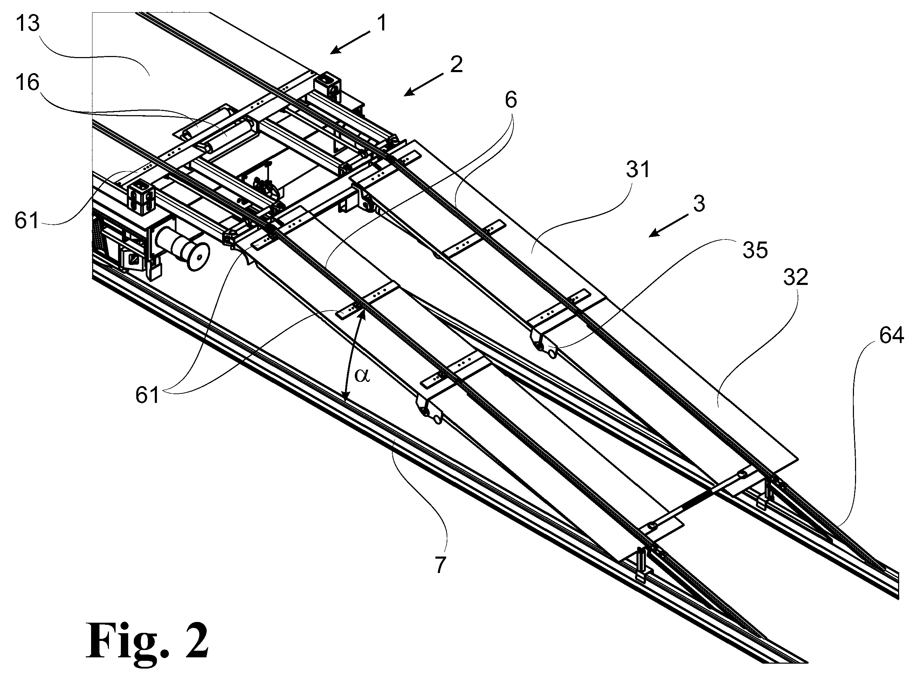

In **Fig. 2** ist die faltbare Rampe 3 in der vollständig ausgeklappten Ladestellung dargestellt, in der sie mit einem Rampenwinkel α eine Verbindung zwischen der Gleisanlage 7 und der Grundplatte 13 des Sandwich-Aufbaus 1 herstellt. Für das Auf- und Abladen von schienengestützten Gefährten 47 sind auf der Oberfläche der Rampe 3 ebenfalls Schienen 6 befestigt, die entsprechend der Faltung der faltbaren Rampe 3 in Abschnitte aufgeteilt sind.

Auf dem klappbaren Rampenabschnitt 31 sind die Schienen 6, nach dem gleichen Prinzip wie auf der Grundplatte 13, auf den Spurweitenverstellungen 61 montiert. Die Spurweitenverstellungen 61 sind orthogonal zu den Schienen 6, in gleichmäßigen Abständen am Anfang, am Ende und in der Mitte auf dem klappbaren Rampenabschnitt 31 befestigt.

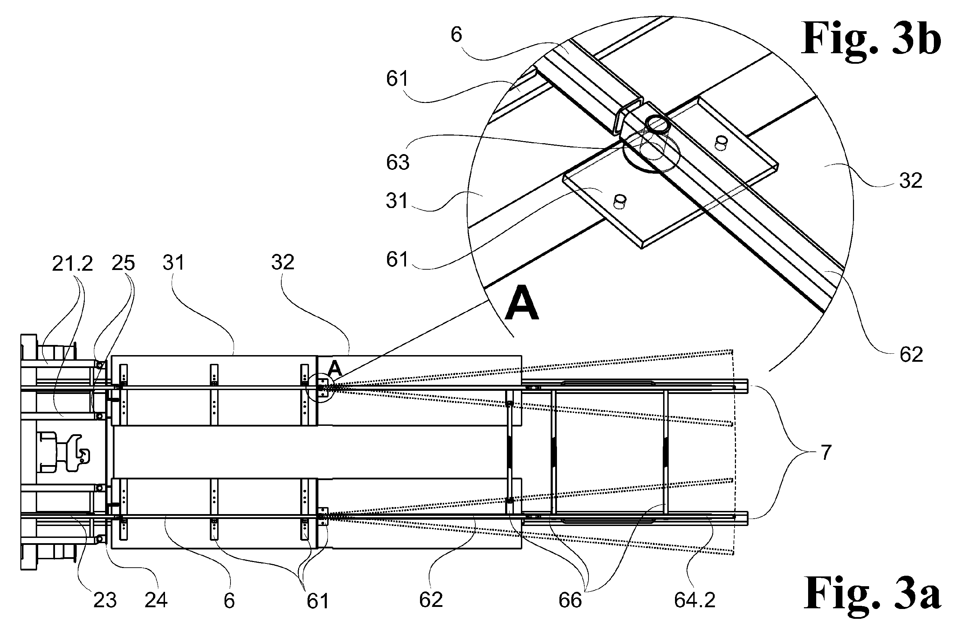

Im Bereich des faltbaren Rampenabschnitts 32 bilden die Schienen 6, wie in **Fig. 3a** dargestellt, einen schwenkbaren Schienenabschnitt 62, der an orthogonal zur Oberfläche der Rampe 3 orientierten Schwenklagern 63 befestigt ist. Das Schwenklager 63 wird wie in **Fig. 3b** gezeigt, mit einer lösbaren Verbindung in unmittelbarer Nähe zum Knickgelenk 35 der Rampe 3, auf der Oberfläche des faltbaren Rampenabschnitts 32 befestigt. Zur Befestigung sind parallel zu den Spurweitenverstellungen 61 mehrere Gewindebohrungen im faltbaren Rampenabschnitt 32 vorgesehen, sodass die Spurweite auch im faltbaren Rampenabschnitt 32 einstellbar ist.

Der schwenkbare Schienenabschnitt 62 weist im Verlauf der Oberfläche des faltbaren Rampenabschnitts 32 keine weiteren Befestigungen auf, sodass er um das Schwenklager 63 seitlich ausschwenkbar ist. Die seitliche Schwenkbewegung ist maximal so groß, das der schwenkbare Schienenabschnitt 62 noch vollständig im Bereich der Oberfläche des faltbaren Rampeabschnitts 32 verbleibt und sich bei Belastung durch ein auf- oder abzuladendes schienengestütztes Gefährt 47 auf dem faltbaren Rampenabschnitt 32 abstützen kann. Zur Einhaltung der Spurweite im Bereich des schwenkbaren Schienenabschnitts 62 sind die Schienen 6, wie in **Fig. 1** **und** **Fig. 2** dargestellt, gelenkig mit einer auf die Spurweite einstellbaren Spurstange 66 verbunden. Damit bilden die Schienen 6 des schwenkbare Schienenabschnitts 62 zusammen mit der Spurstange 66 ein um die Schwenklager 63 schwenkendes Parallelogramm.

Um zwischen den Schienen 6 des schwenkbaren Schienenabschnitts 62 und der Gleisanlage 7 einen stufenlosen Übergang herzustellen, ist ein keilförmiger Auslauf der Schiene 6 erforderlich. Dazu werden die Schienen 6 am Ende des schwenkbaren Schienenabschnitts 62 zusätzlich mit einer Schienenverlängerung 64 erweitert. Die auf der Gleisanlage 7 aufliegenden Enden der Schienenverlängerung 64 weisen dazu einen dem Rampenwinkel α entsprechenden und sich spitzwinklig verjüngenden Auslauf auf. Damit die Schienenverlängerung 64 in der Transportstellung nicht über die Abmessungen der Rampe 3 hinaus ragt, sind die Schienenverlängerungen 64 mittels eines orthogonal zum Verlauf der Schienen 6 orientierten Klappgelenks 65 mit den Enden des schwenkbaren Schienenabschnitts 62 verbunden. In der Transportstellung werden die Schienenverlängerungen 64 auf den schwenkbaren Schienenabschnitt 62 eingeklappt und arretiert und sind so gegen ein unbeabsichtigtes Ausklappen gesichert. Aufgrund des relativ geringen Gewichts können die Schienenverlängerungen 64 manuell ein- oder ausgeklappt werden. Es ist aber auch möglich, für diese Bewegung einen mechanischen, elektrischen oder einen Fluid-Antrieb bzw. eine Kombination daraus vorzusehen.

Der Rampenwinkel α der in der Ladestellung befindlichen Rampe 3 kann theoretisch jeden Wert zwischen Null (horizontal) und einem bauartbedingt begrenzten Maximalwert annehmen. Je nach dem Höhenunterschied zwischen Grundplatte 13 des Sandwich-Aufbaus 1 und der Gleisanlage 7 kann es vorkommen, dass die Länge der faltbaren Rampe 3 beim maximalen Rampenwinkel α nicht ausreicht, um den Höhenunterschied zu überbrücken. Außerdem ist es möglich, dass das schienengestützte Gefährt 47 nur über einen flacheren als den maximalen Rampenwinkel α verladen werden kann. Die Anpassung der Länge der Rampe 3 an große Höhenunterschiede oder an einen erforderlichen flacheren Rampenwinkel α erfolgt mittels der Schienenverlängerungen 64. Bei der Anwendung des erfindungsgemäßen Transport- und Verladesystems ergeben sich Anpassungen der Schienenverlängerungen 64 aus den im folgenden beschriebenen Anwendungsfällen.

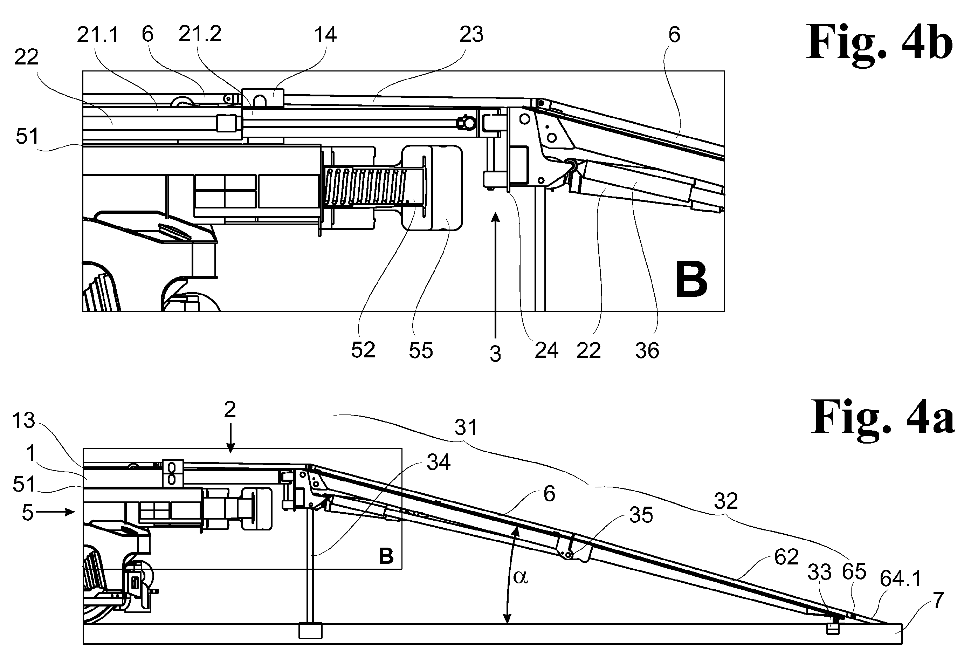

Bei einem ersten Anwendungsfall ist der Sandwich-Aufbau 1 mit Ausschubeinrichtung 2 und faltbarer Rampe 3, wie in einer Seitenansicht in **Fig. 4a** dargestellt, am Ende der Ladeplattform 51 abgestellt. Der Sandwich-Aufbau 1 wird dabei zum Auf- oder Abladen von schiengestützten Gefährten 47 über die Stirnseite des Transportfahrzeugs 5 verwendet. Die Ausschubeinrichtung 2 ist vollständig ausgefahren und die faltbare Auffahrrampe 3 befindet sich in der Ladestellung. Wie in der vergrößerten Schnittdarstellung in **Fig. 4b** zu erkennen, werden die Puffer 52 und die Kupplung 55 des Fahrzeugs 5 mit der Ausschubeinrichtung 2 überbrückt, sodass die Rampe 3 ohne Beschädigungsgefahr ausgeklappt werden kann. Es ist ebenfalls zu erkennen, dass die Abschlussplatte 24 über eine in vertikaler Richtung verstellbaren Höhenverstellung 25 mit den Enden der Linearführungen 21 verbunden ist. Die Höhenverstellung 25 weist an jeder Verbindung der Abschlussplatte 24 zu den Linearführungen 21 eine Säulenführung auf, an der die Abschlussplatte 24 senkrecht geführt wird. Als Antrieb für die Bewegung kann ein Schneckengetriebe mit Handkurbel, ein elektrisch betriebener Schneckenantrieb eingesetzt werden.

In **Fig. 4a und 4b** befindet sich die Höhenverstellung 25 einer unteren Position, in der die Grundplatte 13 des Sandwich-Aufbaus 1 und die entfaltete Rampe 3 auf dem gleichen Höhenniveau liegen. Der durch die ausgefahrene Ausschubeinrichtung 2 entstandene offene Bereich zwischen den Schienen des Sandwich-Aufbaus 1 und der entfalteten Rampe 3 wird, wie bereits oben beschrieben, mit Schienenbrücken 23 überbrückt.

Die in diesem Anwendungsfall beschriebene untere Position ist die tiefste mit der Höhenverstellung 25 zu erreichende. Bei einem konstant gehaltenen Rampenwinkel α ist dementsprechend auch die Länge der auf der entfalteten Rampe 3 verlegten Schienen 6 am kürzesten. Wie in **Fig. 4a** dargestellt, ist deshalb auch nur eine kurze Schienenverlängerung 64.1 zur Schaffung des stufenlosen Übergangs zur Gleisanlage 7 erforderlich.

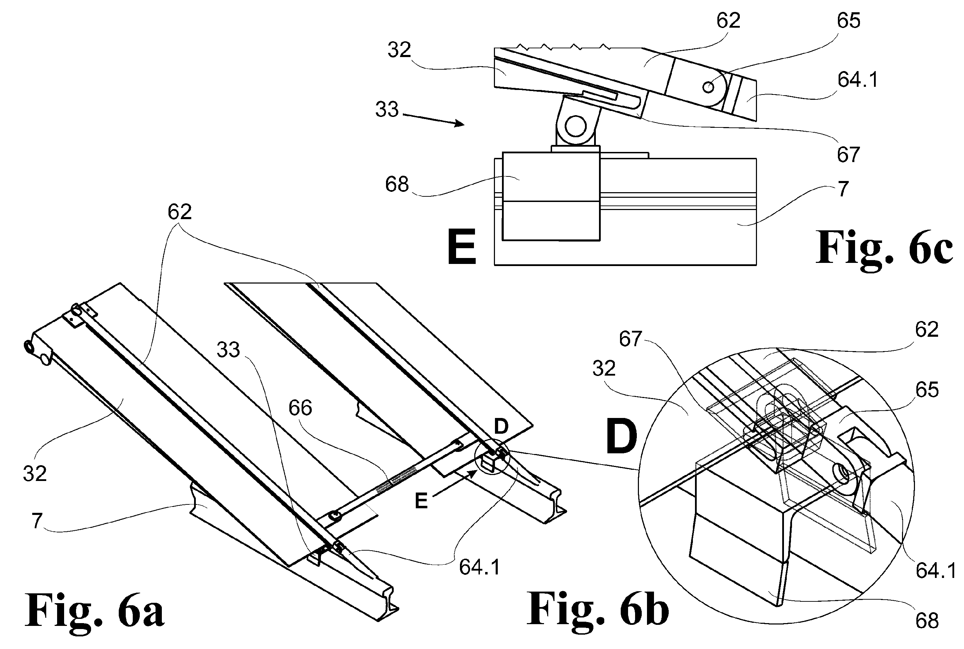

Da die mit diesem Rampenwinkel α entfaltete Rampe 3 selbst nicht auf der Gleisanlage 7 aufliegt, ist an der Unterseite des freien Endes des faltbaren Rampenabschnitts 32 ein Paar kurzer Stützen 33 angebracht, mit der die faltbare Auffahrrampe 3 auf den beiden Gleisen der Gleisanlage 7 abgestützt wird. In der **Fig. 6c** sind die kurzen Stützen 33 in einer geschnittenen Seitenansicht dargestellt. Die kurzen Stützen 33 sind an einer das freie Ende des faltbaren Rampenabschnitts 32 umgreifenden Lasche 67, die an beiden Enden des schwenkbaren Schienenabschnitts 62 befestigt ist, pendelnd an einem orthogonal zur Richtung der Gleisanlage 7 orientierten Lager befestigt. Bei einer Bewegung der faltbaren Auffahrrampe 3 hängen die kurzen Stützen 33 somit immer, der Schwerkraft folgend, senkrecht nach unten. Die Laschen 67 stellen eine formschlüssige Verbindung zum Rand des freien Endes des faltbaren Rampenabschnitts 32 her und ermöglichen die in **Fig. 3a** dargestellte seitliche Schwenkbewegung des schwenkbaren Schienenabschnitts 62. Der direkt auf dieGleisanlage 7 aufsetzende Teil der kurzen Stützen 33 ist, wie in **Fig. 6a und 6b**

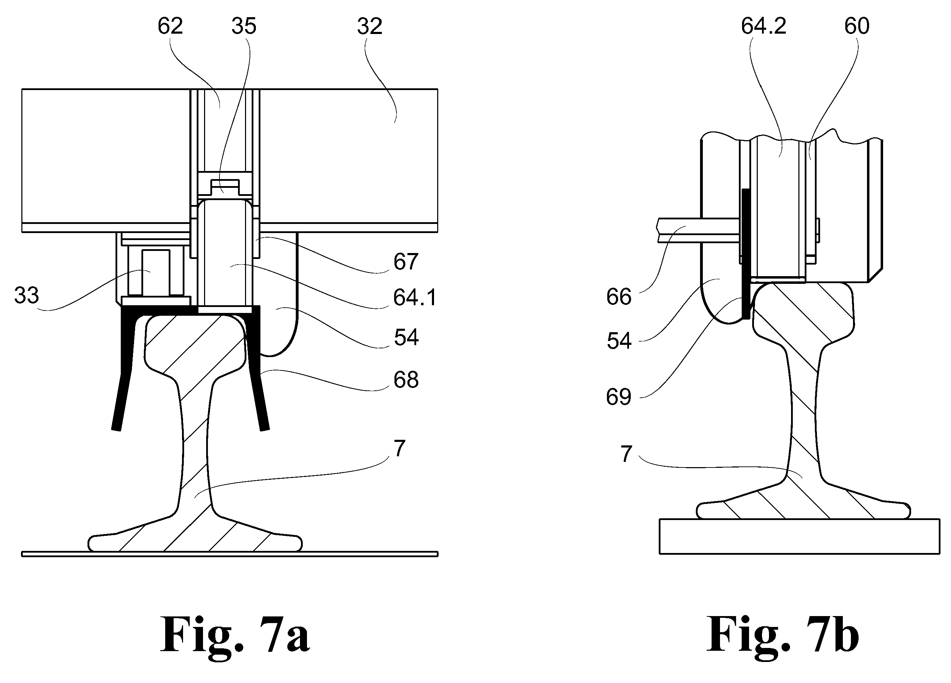

gezeigt, als ein umgekehrtes auf die Schienen der Gleisanlage 7 aufgesetztes U-Profil 68 ausgeführt. Das U-Profil 68 wird als Mittel zur Führung des schwenkbaren Schienenabschnitt 62 an der Gleisanlage 7 verwendet, wenn sich das Transportfahrzeug 5 in einer Kurve der Gleisanlage 7 befindet. **Fig. 7a** zeigt in einer Profilansicht das auf dem in Fahrtrichtung gesehen linken Gleis aufliegende U-Profil 68 mit der kurzen Stütze 33, das Ende des schwenkbaren Schienenanschnitts 62 mit der kurzen Schienenverlängerung 64.1 und das Scheibenrad 54 des Transportfahrzeugs 5.

In der **Fig. 4b** ist außerdem eine lange Stütze 34, die ebenfalls paarweise zur Abstützung der Ausschubeinrichtung 2 und der Rampe 3 auf der Gleisanlage 7 vorgesehen ist, dargestellt. Die langen Stützen 34 sind beweglich an der zur Gleisanlage 7 weisenden Unterseite des an der Abschlussplatte 24 angebrachten Endes der faltbaren Auffahrrampe 3 an einem orthogonal zum Verlauf der Gleisanlage 7 orientierten Lager befestigt und können von Hand oder mit einer Antriebseinheit (nicht dargestellt) aus- und eingeklappt werden..

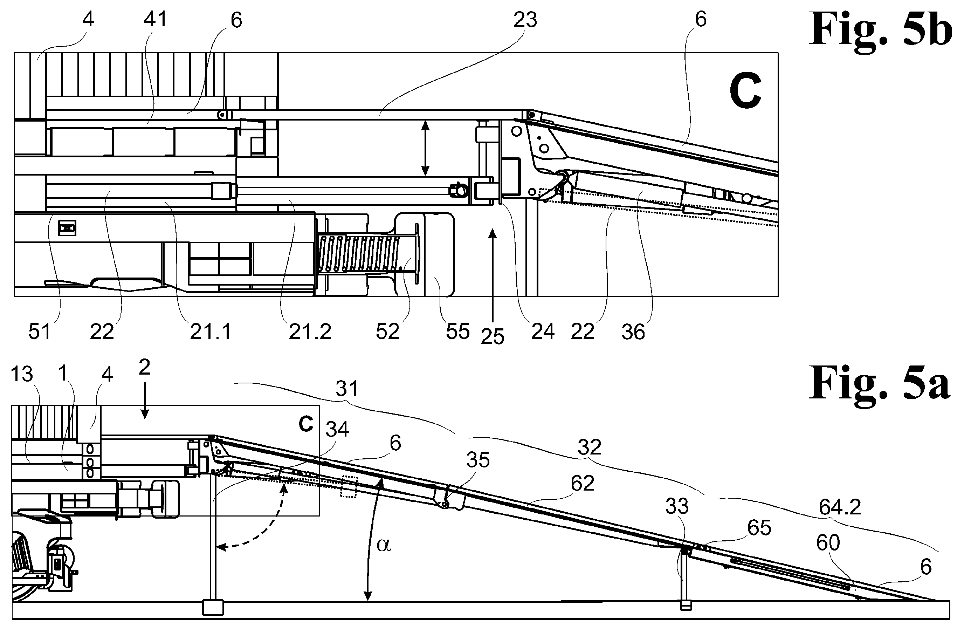

In einem zweiten Anwendungsfall gemäß **Fig. 5a** ist auf dem Sandwich-Aufbau 1 der ISO-Container 4 abgestellt. Der ISO-Container 4 ist mit seinen Containerecken 14 auf den Containerecken 14 des Sandwich-Aufbaus 1 abgestellt, wobei die Containerecken 14 mit den Verrieglungselementen 53 lösbar miteinander verbunden sind. Der ISO-Container 4 ist vorzugsweise ein auf die Verwendung mit dem Transport- und Verladesystem angepasster ISO-Container 4, und soll im folgenden als ein Verwahrungs-Container 42 bezeichnet werden, der zur Aufnahme des schiengestützten Gefährts 47 verwendet wird. Die Anpassung des Verwahrungs-Containers 42 besteht darin, dass eine im Inneren des Verwahrungs-Containers 42 vorhandene Bodenfläche 41 durch die in der Spurweite einstellbaren Schienen 6 modifiziert wird.

In **Fig. 5a und 5b** ist die Ausschubeinrichtung 2 vollständig ausgefahren und die Rampe 3 befindet sich in der Ladestellung. Um das Höhenniveau der Rampe 3 an das Höhenniveau der Bodenfläche 41 des abgestellten Verwahrungs-Containers 42 anzupassen, muss die Abschlussplatte 24 mit der daran befestigten Rampe 3 mittels der Höhenverstellung 25 in eine obere Position bewegt werden. Zur Überbrückung des durch die ausgefahrene Ausschubeinrichtung 2 entstandenen offenen Bereichs zwischen den Schienen 6 des Verwahrungs-Containers 42 und der entfalteten Rampe 3 werden Schienenabschnitte eingesetzt.

Durch das veränderte Höhenniveau der Rampe 3, ist es bei konstant gehaltenen Rampenwinkel α erforderlich, die Länge der Schienenverlängerung 64 anzupassen. Entsprechend dem Verstellweg der Höhenverstellung 25 ergibt sich der Betrag der Verlängerung aus dem Quotienten des Verstellwegs und dem Sinus des Rampenwinkels α. Bei der in **Fig. 5a** dargestellten oberen Position der Höhenverstellung 25 ist daher die Schienenverlängerung 64 in Form einer langen Schienenverlängerung 64.2 ausgeführt. Aufgrund der größeren Länge sind die Schienen 6 der langen Schienenverlängerung 64.2 allein nicht mehr stabil genug um die Gewichtskräfte beim Auf- und Abladen von schiengestützten Gefährten 47 aufzunehmen. Zur Stabilisierung sind die langen Schienenverlängerungen 64.2 fest mit einem massiven Unterzug 60 in Form eines Doppel-T-Trägers verbunden, der entsprechend der spitz auslaufenden langen Schienenverlängerung 64.2 ebenfalls einen sich mit dem Rampenwinkels α keilförmig verjüngenden und auf der Gleisanlage 7 aufliegenden Auslauf aufweist. Zur Einhaltung der Spurweite ist Anfang und Ende der langen Schienverlängerung 64.2 an den Unterzügen 60 gelenkig mit einstellbaren Spurstangen 66 verbunden.

Als Mittel zur Führung des schwenkbaren Schienenabschnitts 62 mit der langen Schienenverlängerungen 64.2 an der Gleisanlage 7, falls sich das Transportfahrzeug 5 in einer Kurve der Gleisanlage 7 befindet, werden an den auf der Gleisanlage 7 aufliegenden Flächen der Unterzüge 60, wie in **Fig. 7b** in einer Profilansicht des in Fahrtrichtung gesehen rechten Gleis gezeigt, seitliche Anschläge 69 befestigt. Der Anschlag 69 wird mittels eines senkrecht und seitlich am Unterzug 60 befestigten Blechs realisiert..

Die Abstützung der Ausschubeinrichtung 2 und der Rampe 3 erfolgt auf der Gleisanlage 7 mit den kurzen Stützen 33 und den langen Stützen 34. Gegenüber den Längen der Stützen 33 und 34 im ersten Anwendungsfall sind im zweiten Anwendungsfall um den Verstellweg der Höhenverstellung 25 verlängerte Stützen 33 und 34 erforderlich. Zur einfachen Verlängerung und für den Fall, dass auch Positionen zwischen der unteren und der oberen Position der Höhenverstellung 25 eingestellt werden sollen, sind die kurzen Stützen 33 und die lange Stützen 34 für diesen Anwendungsfall mit einer Längenverstellung ausgestattet.

In **Fig. 5a** ist außerdem die Einklappbewegung und die Position der langen Stützen 34 gezeigt, in der sie sich in der Transportstellung der faltbaren Auffahrrampe 3 befinden. Dazu werden die langen Stützen 34 in die mit einer unterbrochenen Linie gezeigte Stellung eingeklappt und an der Unterseite des klappbaren Rampenabschnitts 31 arretiert.

Die in **Fig. 5a und 5b** dargestellte obere Position der Höhenverstellung 25 ist die Ausgangsposition, die einzunehmen ist, um die Ausschubeinrichtung 2 von der ausgefahrenen Position in die eingefahrene Position oder umgekehrt zu bewegen. Nur die obere Position ermöglicht das vollständige Einfahren der Ausschubeinrichtung 2, ohne dass die Höhenverstellung 25, die Abschlussplatte 24 oder Teile der Rampe 3 mit der Kupplung 55, den Puffern 52 oder der Stirnseite des Transportfahrzeugs 5 kollidieren.

Die vollständig eingefahrene Ausschubeinrichtung 2 mit der in der Transportstellung befindlichen eingefalteten Rampe 3 ist in **Fig. 8** gezeigt. Wie für den zweiten Anwendungsfall beschrieben, ist der Verwahrungs-Container 42 auf dem Sandwich-Aufbau 1 abgestellt. In der Transportstellung wird die kurze Seite des Sandwich-Aufbaus 1 vollständig von der Abschlussplatte 24 abgedeckt. Die Rampe 3 befindet sich unmittelbar vor den nicht dargestellten Ladetoren des Verwahrungs-Containers 42. Es ist zu erkennen, dass die eingefaltete Rampe 3 so dimensioniert ist, dass sie die Außenabmessungen des Verwahrungs-Containers 42 oder beliebiger anderer auf dem Sandwich-Aufbau 1 abgestellter ISO-Container 4 in der Höhe und Breite nicht überragt, sodass die hier gezeigte Kombination aus Sandwich-Aufbau 1 und Verwahrungs-Container 42 ohne Probleme zwischen neben- oder übereinander stehenden ISO-Containern 4 eingestapelt und gelagert werden kann bzw. mit standardisierten Container-Handling-Anlagen (beispielsweise Container-Verladebrücken oder anderen Kranen) verwendet werden kann. In der **Fig. 8** sind auch die auf den schwenkbaren Schienenabschnitt 62 eingeklappten und in dieser Position arretierten langen Schienenverlängerungen 64.2 mit den zwei an den Unterseiten der Unterzüge 60 befestigten Spurstangen 66 und den Anschlägen 69 zu sehen.

In einer anderen Ausführung der Erfindung kann der Sandwich-Aufbau 1 auch unlösbar mit einem Spezialcontaineraufbau verbunden werden. Diese Anpassung ermöglicht eine vollständige Aufnahme der Ausschubeinrichtung 2 und der Rampe 3 innerhalb den Außenabmessungen des Spezialcontaineraufbaus, sodass das Transport- und Verladesystem in Länge, Höhe und Breite den standardisierten Abmessungen eines ISO-Containers 4 entspricht. Die faltbare Rampe 3 kann dabei so gestaltet werden, das diese in der Transportstellung die Ladetore des Spezialcontaineraufbaus ersetzt. Es ist auch möglich, die in der Transportstellung befindliche Ausschubeinheit 2 mit der Rampe 3 innerhalb des Spezialcontaineraufbau anzuordnen, sodass diese hinter den standardmäßig vorhandenen und geschlossenen Ladetoren verstaut werden können und somit optimal vor Beschädigungen geschützt sind.

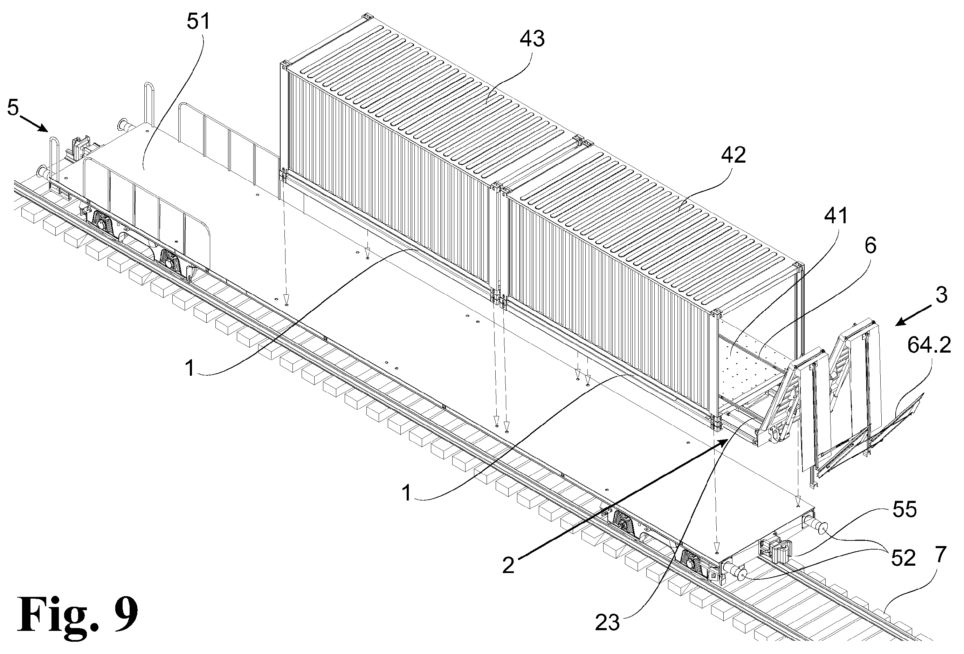

In **Fig. 9** ist ein Beispiel für die Gestaltung des Transport- und Verladesystems nach dem zuvor beschriebenen zweiten Anwendungsfall des ersten Ausführungsbeispiels dargestellt. Als Transportfahrzeug 5 wird ein Eisenbahn-Flachwaggon verwendet, der zur Aufnahme und Befestigung von drei hintereinander angeordneten 20 Fuß-ISO-Containern geeignet ist. An dem entgegen der Fahrtrichtung des Fahrzeugs 5 weisenden Ende der Ladeplattform 51 ist der Sandwich-Aufbau 1 mit der Auf- und Abladeeinheit abgestellt und über die Verrieglungselemente 53 mit dem Transportfahrzeug 5 verbunden. Auf dem Sandwich-Aufbau 1 ist der Verwahrungs-Container 42 aufgesetzt, der über die Verrieglungselemente 53 mit dem Sandwich-Aufbau 1 verbunden ist. Der Verwahrungs-Container 42 beinhaltet vorzugsweise das schienengestützte Gefährt 47, das auf die Gleisanlage 7 abzuladen oder von der Gleisanlage 7 aufzunehmen ist. Aufgrund des auf dem Sandwich-Aufbau 1 abgestellten Verwahrungs-Containers 42 befindet sich die faltbare Rampe 3 in der Verladestellung in der oberen Position der Höhenverstellung 25. Zum Ausgleich des größeren Höhenunterschieds zwischen Bodenfläche 41 und der das Bodenniveau bildenden Gleisanlage 7 werden an der Rampe 3 die langen Schienenverlängerungen 64.2 verwendet.

In **Fig. 9** ist ein mittig auf der Ladeplattform 51 und unmittelbar benachbart zum ersten abgestellter zweiter ISO-Container 4 dargestellt. Wie beim Verwahrungs-Container 42 handelt es sich hierbei um einen ebenfalls speziell auf die Verwendung mit dem Transport- und Verladesystem angepassten ISO-Container 4, der im Folgenden als ein Versorgungs-Container 43 bezeichnet wird. Der Versorgungs-Container 43 beinhaltet die Versorgungseinrichtung 48 und nimmt alle für den autarken Betrieb des Transport- und Verladesystems erforderlichen Aggregate und Betriebsmittel und die zum Unterhalt der schienengestützten Gefährte 47 erforderlichen Einrichtungen und Hilfsstoffe auf.

Der Versorgungs-Container 43 ist auf die gleiche Weise wie der Verwahrungs-Container 42 auf der Ladeplattform 51 des Transportfahrzeugs 5 abgestellt und befestigt. Im Unterschied zum Verwahrungs-Container 42 ist der Versorgungs-Container 43 auf einem Sandwich-Aufbau 1 ohne erweiterten Funktionsumfang abgestellt, der über keine Auf- und Abladeeinheit sondern nur über die durch ihn hindurch geschleiften Versorgungsleitungen verfügt und der nur zur Angleichung des Höhenniveaus der Bodenflächen 41 verwendet wird. Das benachbarte Abstellen des Versorgungs-Containers 43 bzw. weiterer ISO-Container 4 zwischen dem Verwahrungs-Container 42 und dem Versorgungs-Container 43 ermöglicht es, den Innenraum mehrerer ISO-Container 4 zu einer gemeinsam nutzbaren Einheit zu verbinden. Dazu werden die sich gegenüberstehenden stirnseitigen Ladetore als Rolltore (nicht dargestellt) ausgeführt, die vollständig in den Innenraum des Verwahrungs-Containers 42, des Versorgungs-Containers 43 oder anderer ISO-Container 4 eingezogen werden können.

Wenn die Bodenfläche 41 des Versorgungs-Containers 43 oder weiterer, zwischen diesem und dem Verwahrungs-Container 42 abgestellter ISO-Container 4 mit Schienen 6 ausgestattet sind und zwischen den benachbart abgestellten ISO-Containern 4 verbleibende Lücken zwischen den Bodenflächen 41 mit kurzen Schienenabschnitten überbrückt werden, können auch die schienengestützten Gefährte 47 durch den gesamten Innenraum dieser ISO-Container 4 bewegt werden.

Mit den Aggregaten (nur in Fig. 10 dargestellt) des Versorgungs-Containers 43 werden die für den autarken Betrieb der Auf- und Abladeeinheit erforderlichen Energien und Betriebsdrücke erzeugt. Je nach Antriebskonzept kann dafür ein mit Verbrennungsmotor betriebener Generator verwendet werden, der elektrische Energie liefert, die entweder direkt zum Betrieb von Elektromotoren der Auf- und Abladeeinheit oder indirekt zum Betreiben von Aggregaten zur pneumatischen oder hydraulischen Druckerzeugung verwendet werden. Mit einem pneumatischen oder hydraulischen Drucksystem werden dann Fluid-Antriebe der Auf- und Abladeeinheit versorgt.

Die Anbindung des Versorgungs-Containers 43 an den zu versorgenden Sandwich-Aufbau 1 oder an andere ISO-Container 4 erfolgt über die Verbindungsleitungen, die an den Leitungsanschlüssen der Koppelstellen (nicht dargestellt) der Sandwich-Aufbauten 1 angeschlossen werden. Für den Anschluss der Verbindungsleitungen an den Versorgungs-Container 43 verfügt dieser ebenfalls über eine Koppelstelle. Wie an einer der Längsseiten des Sandwich-Aufbaus 1, ist die Koppelstelle in eine der Seitenwände des Versorgungs-Containers 43 eingelassen, und macht die Leitungsanschlüsse der Versorgungseinrichtung 48 von außen zugänglich. Für eine einfache und schnelle Handhabung sind die Leitungsanschlüsse ebenfalls in Form von Schnellverbindern ausgeführt. Die Leitungsanschlüsse des Versorgungs-Containers 43 werden mit den Verbindungsleitungen an den Leitungsanschlüssen des unter dem Versorgungs-Container 43 stehende Sandwich-Aufbau 1 ohne erweiterten Funktionsumfang angeschlossen. Dazu wird die an einem Ende der Längsseite des Sandwich-Aufbaus 1 angeordnete Koppelstelle verwendet. An der am anderen Ende des Sandwich-Aufbaus 1 angeordnete Koppelstelle wird der Sandwich-Aufbau 1 mit der Auf- und Abladeeinheit angeschlossen.

In **Fig. 10** ist ein Beispiel für die Verwendung des Transport- und Verladesystems nach dem ersten Anwendungsfall des ersten Ausführungsbeispiel dargestellt. Der mit der Auf- und Abladeeinheit ausgestattete Sandwich-Aufbau 1 ist wieder am entgegen der Fahrtrichtung des Fahrzeugs 5 gerichteten Ende der Ladeplattform 51 abgestellt und mit Verrieglungselementen 53 befestigt. Wie bereits zur **Fig. 3a und 3b** beschrieben, ist in diesem Anwendungsfall der Verwahrungs-Container 42 nicht auf dem Sandwich-Aufbau 1, sondern unmittelbar benachbart vor dem Sandwich-Aufbau 1 auf dem Transportfahrzeug 5 abgestellt und mit Verrieglungselementen 53 befestigt. Da sich die Rampe 3 in der Verladestellung in der unteren Position der Höhenverstellung 25 befindet, werden an der Rampe 3 die kurzen Schienenverlängerungen 64.1 verwendet.

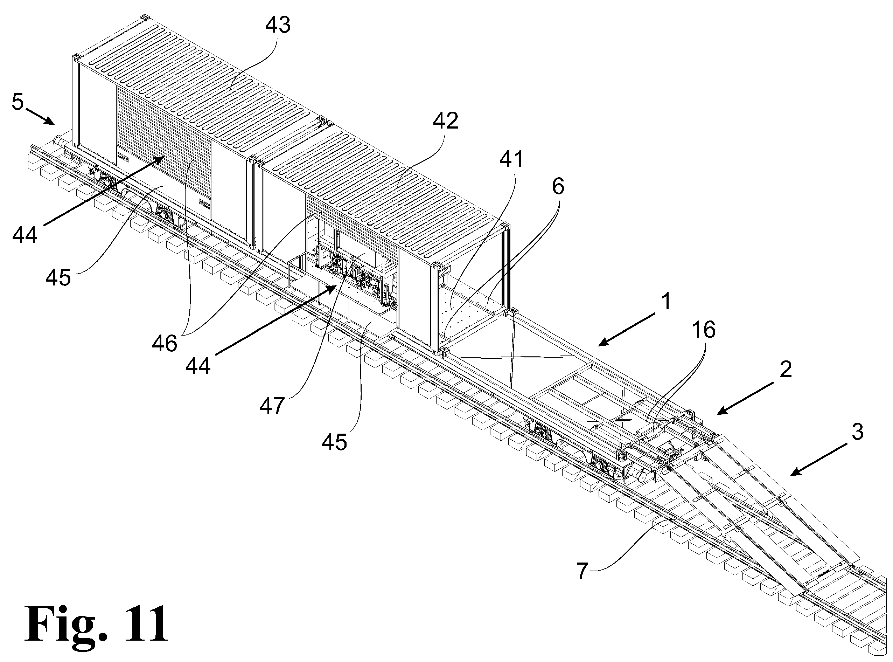

Eine weitere Ausführung des Transport- und Verladesystems ist in **Fig. 11** gezeigt, in der beim Verwahrungs-Container 42 und beim Versorgungs-Container 43 weitere vorteilhafte Anpassungen gegenüber herkömmlichen ISO-Containern 4 vorgenommen wurden. Um den Funktionsumfang für die Verwendung mit schienengestützten Gefährten zu erweitern, wurden neben den auf der Bodenfläche 41 angebrachten Schienen 6, Wartungsöffnungen 44 in die beiden Seitenwände der ISO-Container 4 integriert. Dazu wurden die Mittelteile der ursprünglich vorhandenen Seitenwände der ISO-Container 4 herausgetrennt und die oberen zwei Drittel des entstandenen Durchbruchs durch eine Jalousie 46 ersetzt. In das untere Drittel des Durchbruchs wurde eine seitlich horizontal ausklappbare Bordwand 45 eingesetzt. Der Boden der waagerecht ausgeklappten Bordwand 45 bildet eine Arbeitsbühne und im vertikal eingeklappten Zustand eine das untere Drittel der Wartungsöffnung 44 verschließende Bordwand. Im ausgeklappten Zustand wird die Bodenfläche 41 des Verwahrungs-Containers 42 und/oder des Versorgungs-Containers 43 um die Flächen der seitlich ausklappbaren Bordwand 45 erweitert. Das Aus- und Einklappen der Bordwände 45 erfolgt mittels Linearantrieben 22, vorzugsweise in Form von Fluid-Zylindern.

Durch die ausgeklappte Bordwand 45 wird es möglich, die Arbeitsfläche im Verwahrungs-Container 42 zu vergrößern und Wartungsarbeiten an einem im Verwahrungs-Container 42 abgestellten schienengestützten Gefährt 47 durchzuführen, ohne dass das schienengestützte Gefährt 47 dazu aus dem Verwahrungs-Container 42 herausbewegt werden und für den freien seitlichen Zugang zum schienengestützten Gefährts 47 ebenerdig abgestellt werden muss. Die ausgeklappte Bordwand 45 kann mit einem Geländer versehen werden und ragt nur soweit über die Abmessungen des Verwahrungs-Containers 42 heraus, dass Wartungsarbeiten im Verwahrungs-Container 42 bei ausgeklappter Bordwand 45 in einem geraden Gleisabschnitt auch ohne Gefährdung des Verkehrs auf dem Nachbargleis erfolgen können.

Für die Versorgung des Transport- und Verladesystems ist auf der Ladeplattform 51 des Transportfahrzeugs 5 vor dem Verwahrungs-Container 42 der Versorgungs-Container 43 abgestellt und mit Verrieglungselementen 53 befestigt. Neben den zur Versorgung benötigten Aggregaten, kann auf dem im Versorgungs-Container 43 verbleibenden Platz ebenfalls ein schienengestütztes Gefährt 47 aufgenommen und durch die Wartungsöffnungen 44 in gleicher Weise, wie oben für den Verwahrungs-Container 42 beschrieben, gewartet werden. In **Fig. 11** ist am Verwahrungs-Container 42 die geöffnete, und am Versorgungs-Container 43 die geschlossene Stellung der Wartungsöffnungen 44 gezeigt. Im Verwahrungs-Container 42 ist auch ein durch die Wartungsöffnung 44 sichtbares schienengestütztes Gefährt 47 abgestellt.

Für beide zuvor beschriebenen Anwendungsfälle erfolgt das Auf- und Abladen mit den angetriebenen Scheibenrädern 54 des schienengestützten Gefährts 47. Zur Verbesserung der Haftreibung können auf Rampe 3 auch speziell angepasste Schienen 6 (guide rails) mit verengten Spurrillen, in die sich die konischen Spurkränze der Scheibenräder 54 einkeilen, eingesetzt werden. Die Spurrillen dienen zur Führung und erhöhten Reibung der Spurkränze der Scheibenräder 54. Die Spurrillen sind so eng gestaltet, dass die Scheibenräder 54 der schienengestützten Gefährte 47 nicht mit deren Laufflächen auf der Oberfläche der Schienen 6, sondern mit den Spurkränzen der Scheibenräder 54 an den Kanten der Spurrillen keilig aufliegen. Durch die von der Gewichtskraft des schienengestützten Gefährts 47 bestimmte Klemmkraft, führt zu einer erheblichen Steigerung der Reibung, was die Überwindung des Rampenwinkels α mit den angetriebenen Scheibenrädern 54 des schienengestützten Gefährts 47 ermöglicht.

Zusätzlich kann im Versorgungs-Container 43 eine Seilwinde vorhanden sein, mit welcher der Auf- und Abladevorgang vollständig oder unterstützend durchgeführt werden kann. Bei einem am Seil der Winde eingehangenen schienengestützten Gefährt 47 verläuft das gespannte Seil in Bodennähe, mittig entlang der Bodenflächen 41 eines ISO-Containers 4 bzw. der Grundplatte 13 des Sandwich-Aufbaus 1. Um das Seil vor Erreichen der faltbaren Auffahrrampe 3 entsprechend dem Rampenwinkel α umzulenken, ist nahe der mit der Rampe 3 versehenen kurzen Seite des Sandwich-Aufbaus 1 eine Umlenkrolle 16 in die Grundplatte 13 eingelassen. Die Umlenkrolle 16 kann auch am Ende der Bodenflächen 41 des Versorgungs-Containers 43 oder des Verwahrungs-Containers 42 eingesetzt sein, um das Seil umzulenken, wenn diese auf dem Sandwich-Aufbau 1 mit der Rampe 3 abgestellt sind und abgesetzt (gerollt) werden sollen.

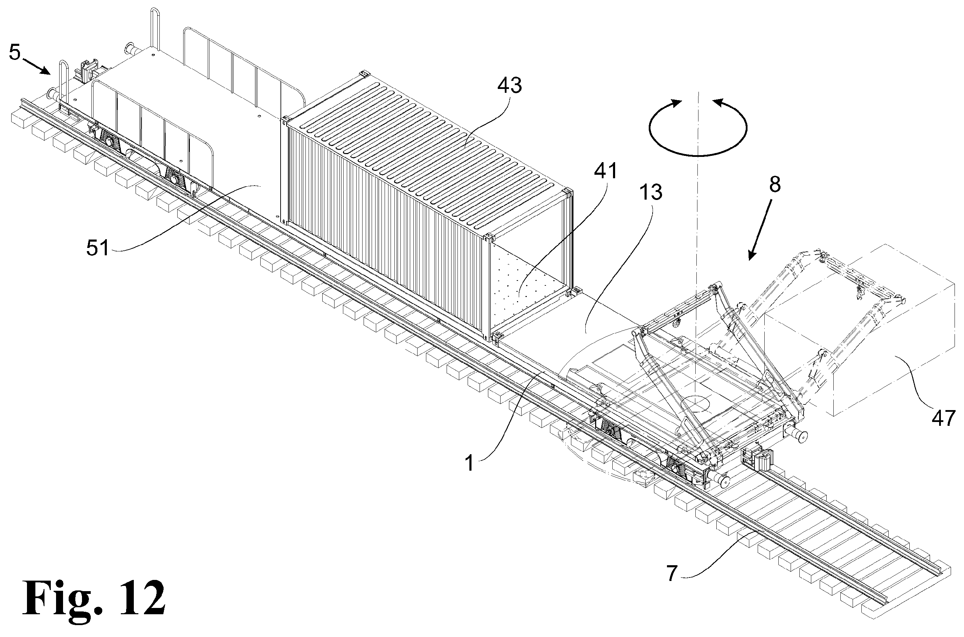

In einem zweiten Ausführungsbeispiel der Erfindung wird, wie in **Fig. 12** gezeigt, die Auf- und Abladeeinheit des Sandwich-Aufbaus 1 durch die Verwendung eines ausschwenkbaren Teleskopauslegers 8 realisiert, der um eine senkrechte Rotationsachse drehbar auf dem Sandwich-Aufbau 1 gelagert ist. Dazu wird ein Teil der die Grundplatte 13 bildenden Bodengruppe des Sandwich-Aufbaus 1 auf einem Lager drehbar aufgenommen, sodass der Teleskopausleger 8 mit mindestens +/-90° um das Heck des den Sandwich-Aufbau 1 aufnehmenden Transportfahrzeugs 5 gedreht werden kann. Die Rotationsachse ist dazu in etwa gleichen Abständen von den Längsseiten und der hinteren kurzen Seite des Sandwich-Aufbaus 1 entfernt angeordnet. Der Teil der drehbaren Grundplatte 13 ist dabei in gleicher Weise ausgebildet und angetrieben, wie in der nicht vorveröffentlichten Patentanmeldung DE 10 2011 057 043 A1 für einen Sattelauflieger beschrieben.

Durch diesen drehbaren Teleskopausleger 8 wird das Absetzten und Aufnehmen von schienengestützten Gefährten 47 sowohl über das Heck als auch zu beiden Seiten des Transportfahrzeugs 5 (z.B. auf ein benachbartes Gleis) ermöglicht. Die für die Rotationsbewegung erforderlichen Antriebe, Lagerungen und Kraftübertragungen werden dabei vollständig im Zwischenraum 15 des Sandwich-Aufbaus 1 aufgenommen.

In einem dritten Ausführungsbeispiel, das gegenüber dem zweiten Beispiel vereinfacht ist, wird die Auf- und Abladeeinheit des Sandwich-Aufbaus 1 ebenfalls durch die Verwendung des Teleskopauslegers 8 realisiert. Der Teleskopausleger 8 ist an dem zum Heck des Transportfahrzeugs 5 weisenden Ende des Sandwich-Aufbaus 1 an horizontal und orthogonal zu den Längsseiten orientierten Lagern aufgenommen, sodass er zwischen der Grundplatte 13 und der Gleisanlage 7 schwenkbar ist. Seitliche Teleskoparme des Teleskopauslegers 8 und die für deren Bewegung erforderlichen Fluid-Zylinder sind dabei so an den Längsseiten des Sandwich-Aufbaus 1 befestigt, dass es immer noch möglich ist einen ISO-Container 4 zwischen den Teleskoparmen des Teleskopauslegers 8 auf der Grundplatte 13 des Sandwich-Aufbaus 1 abzustellen.

Neben den bereits beschriebenen Kombinationen des Transport- und Verladesystems aus einer Anordnung von einem Verwahrungs-Container 42, einem Versorgungs-Container 43 und einem Sandwich-Aufbau 1 mit Auf- und Abladeeinheit (erster Anwendungsfall des ersten Ausführungsbeispiels) bzw. von einem Verwahrungs-Container 42, einem Versorgungs-Container 43 und zwei Sandwich-Aufbauten 1, von denen einer keine Erweiterung mit Auf- und Abladeeinheit aufweist, sind auch eine Vielzahl weiterer Kombinationen im 20 Fuß-ISO-Containerformat möglich.

Bei dem Einsatz auf Eisenbahnwaggons wird die Kombination vorzugsweise so erfolgen, dass alle Bestandteile des Transport- und Verladesystems auf einem einzelnen Transportfahrzeug 5 (Flachwaggon) abstellbar sind. Dabei sollte das eine Ende des Transport- und Verladesystems durch den Versorgungs-Container 43 und das andere Ende durch den Sandwich-Aufbau 1 mit der Auf- und Abladeeinheit abgeschlossen werden. Sollten nur zwei 20-Fuß-Container-Stellplätze vorhanden sein, kann auf dem Sandwich-Aufbau 1 der Verwahrungs-Container 42 aufgesetzt werden.

Es ist aber auch möglich, durch die Verwendung von zwei Sandwich-Aufbauten 1 mit einer Ausschubeinrichtung 2 ohne faltbare Rampe 3, die mit der Ausschubeinrichtung 2 gegenüberstehend an der Kopplungsstelle zwischen zwei Transportfahrzeugen 5 abgestellt sind, beide Ausschubeinrichtungen 2 zur Überbrückung der Puffer 52, der Kupplung 55 und damit des Abstands zwischen den beiden Ladeplattformen 51 als Überfahrtbrücke zu nutzen, sodass theoretisch eine beliebige Verlängerung des Transport- und Verladesystems möglich ist und eine Maximalausführung nicht auf zwei oder drei Stellplätze auf einem Transportfahrzeug 5 beschränkt ist.

Die minimale Kombination des modularen Transport- und Verladesystems besteht aus einem Versorgungs-Container 43, in dem auch das schienengestützte Gefährt 47 untergebracht ist und der auf einem Sandwich-Aufbau 1 mit Ausschubeinrichtung 2 und faltbarer Rampe 3 abgestellt ist.

Die Anwendung des Transport- und Verladesystems ist dabei nicht auf die Verwendung von 20 Fuß-ISO-Containern beschränkt. Beispielsweise lassen sich zwei 20 Fuß-ISO-Container auch durch einen 40 Fuß-ISO-Container ersetzen. In dem einen 40 Fuss-ISO-Container können alle notwendigen Einrichtungen bequem untergebracht werden. Zum Durchführen von Auf- und Abladevorgängen wird der 40 Fuß-ISO-Container auf zwei Sandwich-Aufbauten 1 abgestellt, wobei einer der Sandwich-Aufbauten 1 die Auf- und Abladeeinheit mit Ausschubeinrichtung 2 aufweist und der andere Sandwich-Aufbau 1 nur zum Höhenausgleich verwendet wird.

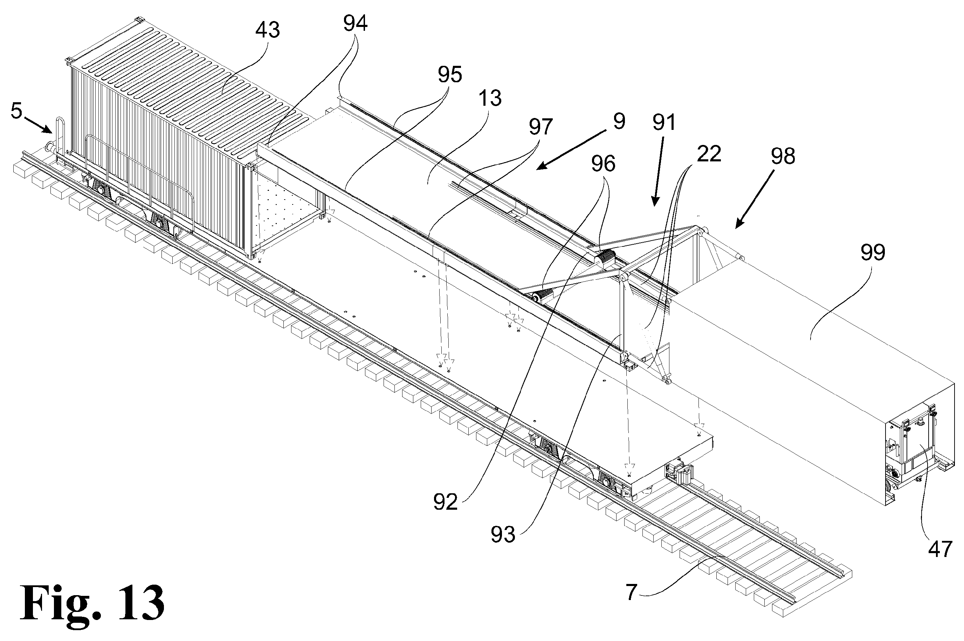

Ein viertes Ausführungsbeispiel ist in **Fig. 13** gezeigt. Am zur Fahrtrichtung entgegengesetzten Ende der Ladeplattform 51 des Transportfahrzeugs 5 ist ein in doppelter Länge ausgeführter langer Sandwich-Aufbaus 9 abgestellt. Zur Versorgung des langen Sandwich-Aufbaus 9 ist auf dem Transportfahrzeug 5 vor dem langen Sandwich-Aufbau 9 ein Versorgungs-Container 43 abgestellt. Beide sind über Verrieglungselemente 53 mit der Ladeplattform 51 des Fahrzeugs 5 verbunden. Der lange Sandwich-Aufbau 9 besteht aus zwei an den kurzen Seiten fest verbundenen Sandwich-Aufbauten 1 im 20 Fuss-ISO-Containerformat und weist dadurch eine Gesamtlänge des 40 Fuss-ISO-Containerformats auf. Der Vorteil der zwei verbundenen 20 Fuss-Sandwich-Aufbauten 1 gegenüber einem Sandwichaufbau im 40 Fuss-ISO-Containerformat, sind die vier zusätzlichen Containerecken 11, die in der Mitte des langen Sandwich-Aufbaus 9 zur Anbringung von Verrieglungselementen 53 zur Verfügung stehen, was bei Belastung die Stabilität verbessert.

Die Auf- und Abladeeinheit ist in Form eines über die gesamte Länge des langen Sandwich-Aufbaus 9 beweglichen Traggestells 91 realisiert, das aus einem rechteckigen horizontalen Rahmen und einem nahezu quadratischen vertikalen Rahmen aufgebaut ist. Der horizontale Rahmen ist mit den Längsseiten parallel zu den Längsseiten des langen Sandwich-Aufbaus 9 ausgerichtet. Für die Bewegung des mobilen Traggestells 91 sind an allen vier Ecken des horizontalen Rahmens Räder angebracht, die auf der Oberseite 12 des langen Sandwich-Aufbaus 9 aufgesetzt werden. Zur Führung dieser Räder sind über die gesamte Länge beider Längsseiten L-Profile 92 befestigt, deren kurze Schenkel parallel und oberhalb der Oberseite 12 zur Mitte des langen Sandwich-Aufbaus 9 gerichtet sind. Zwischen der Oberseite 12 und den kurzen Schenkeln wird eine Führungsbahn für die Räder des mobilen Traggestells 91 gebildet, die in der Höhe fast vollständig von den Rädern ausgefüllt werden, sodass für die Räder wenig Spiel in den Führungsbahnen vorhanden ist.

Auf den der Führungsbahnen gegenüberliegenden Seiten der kurzen Schenkel des L-Profils 92 sind Zahnstangen 92.1 befestigt. In die Zahnstangen 92.1 greifen die Ritzel von, auf dem horizontalen Rahmen des mobilen Traggestells 91 angebrachten Antriebsmotoren 92.2 ein, mit denen es translatorisch entlang des langen Sandwich-Aufbaus 9 bewegt werden kann.

Auf der zum hinteren Ende des langen Sandwich-Aufbaus 9 weisenden Seite des horizontalen Rahmens des mobilen Tragegestells 91 ist der vertikale Rahmen befestigt. Zur Abstützung ist zwischen den noch nicht verbundenen Ecken der beiden Rahmen jeweils eine schräg verlaufende Stützstrebe befestigt. An den vier Ecken der zum hinteren Ende weisenden Seite des senkrechten Rahmens wird ein für die Absetzbewegung verwendetes Parallelogramm 94 gelenkig aufgenommen. Das Parallelogramm besteht aus vier gleichlangen, an den vier Ecken aufgenommenen Linearantrieben 22. An den oberen Ecken des senkrechten Rahmens sind zwei weitere Linearantriebe 22 gelenkig aufgenommen, deren anderes Ende mit den freien Enden der an den unteren Ecken angebrachten Linearantriebe 22 verbunden sind.

An den freien Enden der Linearantriebe 22 des Parallelogramms 94 wird eine geschlossene Absetzbox 95 gelenkig aufgenommen, die durch die Bewegung des Parallelogramms 94 von dem Höhenniveau der Oberseite 12 auf die Gleisanlage 7 abgesetzt oder in umgekehrter Richtung aufgenommen wird. Die Absetzbox 95 ähnelt in ihrer Form einem ISO-Container 4 weist aber kleinere Außenabmessungen als ein ISO-Container 4 auf und ist zur Aufnahme von schienengestützten Gefährten 47 vorgesehen. Die Unterseite der Absetzbox 95 wird durch zwei stabile Längsträger gebildet, die parallel zueinander an den längs verlaufenden Seitenwänden der Absetzbox 95 angeordnet sind. Die schienengestützten Gefährte 47 werden auf diesen Längsträgern in die Absetzbox 95 eingehangen, sodass die Scheibenräder 54 der schienengestützten Gefährte 47 nach unten heraus hängen und auf der Gleisanlage 7 abgesetzt werden können. Auf der Unterseite der Längsträger weist die Absetzbox 95 Rollen auf, mit denen sie auf der Oberseite 12 bewegt werden kann. Für eine geradlinige Bewegung der Absetzbox 95 auf dem langen Sandwich-Aufbau 9 sind auf der Oberseite 12 U-Profilschienen 93 befestigt, in denen die Rollen der Absetzbox 95 geführt werden.

Bei einer auf dem langen Sandwich-Aufbau 9 abgestellten Absetzbox 95 befindet sich das mobile Tragegestell 91 an dem in Fahrtrichtung orientierten Ende des langen Sandwich-Aufbaus 9. Die geschlossene Absetzbox 95 befindet sich vollständig im Bereich des langen Sandwich-Aufbaus 9 und ist mit den Rollen auf der Oberseite 12 abgesetzt. In dieser Transportstellung sind die Linearantriebe 22 des Parallelogramms 94 entlastet. Zum Auf- oder Abladen wird die Absetzbox 95 mit den Linearantrieben 22 leicht ausgehoben und das mobile Tragegestell 91 mittels des Zahnstangenantriebs zum hinteren Ende des langen Sandwich-Aufbaus 9 bewegt. Wenn das mobile Traggestell 91 am hinteren Ende angekommen ist, erfolgt mit dem Parallelogramm die Absetzbewegung der Absetzbox 95 über die hintere Stirnseite des Fahrzeugs 5 hinaus auf die Gleisanlage 7. Die Absetzbox 95 wird dabei vom Parallelogramm 94 ständig parallel zur Gleisanlage 7 gehalten. Die Absetzbewegung wird fortgesetzt, bis die Absetzbox 95 auf den Schwellen der Gleisanlage 7 abgestellt ist und die Linearantriebe 22 entlastet werden können. Kurz vor dem Erreichen der Abstellposition der Absetzbox 95 wird bereits das schienengestützte Gefährt 47 mit den Scheibenrädern 54 auf der Gleisanlage abgestellt, sodass es sich von seiner Auflage auf den beiden Längsträgern der Absetzbox 95 abhebt und auf den Scheibenrädern 54 bewegt werden kann.

### Bezugszeichenliste

- 1: Sandwich-Aufbau
11 Bodengruppe
12 Rahmen
13 Grundplatte
14 Containerecke
15 Zwischenraum
16 Umlenkrolle
- 2: Ausschubeinrichtung
21 Linearführungen
21.1 äußeres Hohlprofil
21.2 inneres Hohlprofil
22 Linearantrieb
23 Schienenbrücke
24 Abschlussplatte
25 Höhenverstellung
- 3: (faltbare) Rampe 31
- klappbarer Rampenabschnitt: 32 faltbarer Rampenabschnitt
- 33: kurze Stütze
- 34: lange Stütze
- 35: Knickgelenk
- 36: Koppelstange
- α: Rampenwinkel
- 4: ISO-Container

- 41: Bodenfläche
- 42: Verwahrungs-Container
- 43: Versorgungs-Container
- 44: Wartungsöffnungen
- 45: (ausklappbare) Bordwand
- 46: Jalousie
- 47: schienengestütztes Gefährt

- 48: Versorgungseinrichtung

- 5: Transportfahrzeug
- 51: Ladeplattform
- 52: Puffer
- 53: Verrieglungselement
- 54: Scheibenrad
- 55: Kupplung

- 6: Schienen

- 60: Unterzug
- 61: Spurweitenverstellung
- 62: schwenkbarer Schienenabschnitt
- 63: Schwenklager
- 64: Schienenverlängerung
- 64.1: kurze Schienenverlängerung
- 64.2: lange Schienenverlängerung
- 65: Klappgelenk
- 66: Spurstange
- 67: Lasche
- 68: U-Profil
- 69: Anschlag

- 7: Gleisanlage
- 8: Teleskopausleger
- 9: langer Sandwich-Aufbau

- 91: Tragegestell
- 92: horizontaler Rahmen
- 93: vertikaler Rahmen
- 94: L-Profil
- 95: Zahnstange
- 96: Antriebsmotor
- 97: U-Profischienen
- 98: Parallelogramm
- 99: Absetzbox

## Patentansprüche

1. Transport- und Verladesystem für schienengestützte Gefährte bei Nutzung von Transportfahrzeugen, die mit einer auf standardisierten ISO-Containerabmessungen basierenden Ladeplattform und mit standardisierten Verrieglungselementen ausgestattet sind, enthaltend
- mindestens einen rechteckigen Rahmen (12) in Form einer Bodengruppe (11) im ISO-Containerformat mit zwei langen und zwei kurzen Seiten und vier ISO-Containerecken (14),
- eine Auf- und Abladeeinheit, die über wenigstens eine kurze Seite des rechteckigen Rahmens (12) hinaus eine Verladung von Gütern ermöglicht,
**dadurch gekennzeichnet, dass**
- das Transport- und Verladesystem einen aus mindestens zwei Bodengruppen (11) im ISO-Containerformat spiegelverkehrt zusammengesetzten Sandwich-Aufbau (1) enthält, wobei die den Rahmen (12) und eine Grundplatte (13) aufweisenden Bodengruppen (11) mit direkt übereinander angeordneten Containerecken (14) starr verbunden sind,
- ein Zwischenraum (15) zwischen den beiden verbundenen Bodengruppen (11) des Sandwich-Aufbaus (1) vorhanden ist, in dem Antriebs-, Übertragungs- und Steuerungseinheiten zum automatisierten Bewegen der Auf- und Abladeeinheit (2, 3; 8; 91, 92, 93, 99) angeordnet sind, und
- Schienen (6) zum Halten und Führen schienengestützter Gefährte (47) auf einer oben liegenden Grundplatte (13) des Sandwich-Aufbaus (1) in Längsrichtung des Rahmens (12) vorhanden und parallel zueinander ausgerichtet sind.

2. Transport- und Verladesystem nach Anspruch 1, **dadurch gekennzeichnet, dass** die Auf- und Abladeeinheit als eine in dem Zwischenraum (15) zwischen den beiden verbundenen Bodengruppen (11) angeordnete lineare Ausschubeinrichtung (2) ausgebildet ist, die wenigstens zwei parallel zu den Längsseiten der rechteckigen Rahmen (12) teleskopartig ausfahrbare Linearführungen (21) mit mindesten einem symmetrisch und parallel dazu angeordneten Linearantrieb (22) aufweist und an mindestens einer der kurzen Seiten der beiden Rahmen (11) des Sandwich-Aufbaus (1) eine Stützstruktur aus oberer Grundplatte (13) des Sandwich-Aufbaus (1) und einer die Ausschubeinrichtung (2) abschließenden Abschlussplatte (24) bildet.

3. Transport- und Verladesystem nach Anspruch 2, **dadurch gekennzeichnet, dass** die Ausschubeinrichtung (2) vier Linearführungen (21) und zwei Linearantriebe (22) aufweist, wobei die Linearantriebe (22) zwischen jeweils zwischen zwei paarweise angeordneten Linearführungen (21) angeordnet sind.

4. Transport- und Verladesystem nach Anspruch 2, **dadurch gekennzeichnet, dass** ein Brückenelement (23), das zum Überbrücken eines bei ausgefahrener Ausschubeinrichtung (2) entstehenden offenen Bereichs und zum Verlängern mindestens der durch die Schienen (6) auf der Grundplatte (13) erzeugten Führung für schienengestützte Gefährte (47) vorgesehen ist, an der aus Grundplatte (13) und Abschlussplatte (24) gebildeten Stützstruktur fixierbar angeordnet ist.

5. Transport- und Verladesystem nach Anspruch 2, **dadurch gekennzeichnet, dass** zusätzlich eine faltbare Rampe (3), die einen klappbaren Rampenabschnitt (31) und einen faltbaren Rampenabschnitt (32) aufweist, an der Abschlussplatte (24) der Ausschubeinrichtung (2) befestigt und als eine Schräge ausklappbar ist, mit der ein Höhenunterschied zwischen der Grundplatte (13) des Sandwich-Aufbaus (1) und dem Bodenniveau, auf dem das den Sandwich-Aufbau (1) befördernde Transportfahrzeug (5) steht, so überbrückt ist, dass schienengestützte Gefährte (47) auf- und abrollbar sind.

6. Transport- und Verladesystem nach Anspruch 5, **dadurch gekennzeichnet, dass** eine vertikal bewegliche Höhenverstellung (25) für die faltbare Rampe (3) an der Abschlussplatte (24) der Ausschubeinrichtung (2) angeordnet ist, sodass ein mit der oberen Grundplatte (13) des Sandwich-Aufbaus (1) übereinstimmendes Anschlussniveau der Rampe (3) an das Niveau einer inneren Bodenfläche eines auf dem Sandwich-Aufbau (1) aufgesetzten ISO-Containers (4) anpassbar ist.

7. Transport- und Verladesystem nach Anspruch 5, **dadurch gekennzeichnet, dass** die faltbare Rampe (3) aus zwei separaten parallel ausgerichteten und mit Schienen (6) belegten Spurabschnitten besteht, die synchron miteinander beweglich sind.

8. Transport- und Verladesystem nach Anspruch 7, **dadurch gekennzeichnet, dass** Schwenklager (63) für schwenkbare Schienenabschnitte (62) an einem oberen Ende des faltbaren Rampenabschnitts (32) der Rampe (3) angebracht sind, die mittig an den parallelen Spurabschnitten des faltbaren Rampenabschnitts (32) angeordnet sind, sodass die Schienenabschnitte (62) seitlich über die Oberfläche des faltbaren Rampenabschnitts (32) schwenkbar sind und bei ausgeklappter Rampe (3) an einen Kurvenverlauf einer Gleisanlage (7) anpassbare Schienenenden ausbilden.

9. Transport- und Verladesystem nach Anspruch 8 **dadurch gekennzeichnet, dass** die schwenkbaren Schienenabschnitte (62) Schienenverlängerungen (64) aufweisen, die über ein Klappgelenk (65) in einer senkrechten Ebene auf die Gleisanlage (7) ausklappbar sind, wobei die Schienenverlängerungen (62) unmittelbar auf der Gleisanlage (7) aufliegende Enden aufweisen, die mit Mitteln zur Führung der Schienenverlängerungen (64) und der schwenkbaren Schienenabschnitte (62) an den Schienen der Gleisanlage (7) versehen sind.

10. Transport- und Verladesystem nach Anspruch 5, **dadurch gekennzeichnet, dass** die faltbare Rampe (3) an mindestens jeweils einem Ende der klappbaren und faltbaren Rampenabschnitte (61, 62) ausklappbare Stützen (33; 34) aufweist.

11. Transport- und Verladesystem nach Anspruch 1, **dadurch gekennzeichnet, dass** ein Teleskopausleger (8) als Auf- und Abladeeinheit auf der oberen Grundplatte (13) des Sandwich-Aufbaus (1) angeordnet ist, wobei der Teleskopausleger (8) zwei Teleskoparme und Linearantriebe (22) aufweist, die jeweils parallel an den langen Seiten des rechteckigen Rahmens (12) des Sandwich-Aufbaus (1) angeordnet sind.

12. Transport- und Verladesystem nach Anspruch 11, **dadurch gekennzeichnet, dass** mindestens ein Teil der oberen Bodengruppe (11) des Sandwich-Aufbaus (1) drehbar um eine senkrechte Rotationsachse gelagert ist, wobei der drehbare Teil den als Auf- und Abladeeinheit vorgesehenen Teleskopausleger (8) aufweist.

13. Transport- und Verladesystem nach Anspruch 1, **dadurch gekennzeichnet, dass** ein Tragegestell (91; 92, 93) als Auf- und Abladeeinheit auf der oberen Grundplatte (13) des Sandwich-Aufbaus (1, 9) longitudinal beweglich angeordnet ist, wobei das Tragegestell (91) entlang der Längsseiten des Sandwich-Aufbaus in Führungsprofilen (94; 97) über die gesamte Länge des Sandwich-Aufbaus (1; 9) beweglich ist, wobei an dem Tragegestell (91; 92, 93) eine Parallelogramm-Anordnung (98) aus Linearantrieben (22), verbunden mit einer Absetzbox (99) zur Aufnahme des schienengestützten Gefährts (47), beweglich angeordnet ist, sodass eine Bewegung zum Auf- und Abladen der Absetzbox (99) aus jeweils einem horizontalen und einem vertikalen Auf- und Abladeschritt zusammengesetzt ist.

14. Verwendung des Transport- und Verladesystems nach Anspruch 1 auf einem Transportfahrzeug (5) mit drei ISO-Container-Stellplätzen, wobei der Sandwich-Aufbau (1; 9) an einem hinteren Ende, ein zur Aufnahme von schienengestützten Gefährten (47) modifizierter ISO-Container (42) mittig und ein zur Versorgung des Sandwich-Aufbaus (1; 9) modifizierter ISO-Container (43) an einem vorderen Ende der Ladeplattform (51) des Transportfahrzeugs (5) angeordnet sind.

15. Verwendung des Transport- und Verladesystems nach Anspruch 1 auf einem Transportfahrzeug (5) mit zwei ISO-Container-Stellplätzen, wobei der Sandwich-Aufbau (1; 9) an einem hinteren Ende, ein zur Aufnahme von schienengestützten Gefährten (47) modifizierter ISO-Container (42) auf dem Sandwich-Aufbau (1) aufgesetzt und ein zur Versorgung des Sandwich-Aufbaus (1) modifizierter ISO-Container (43) vor dem Sandwich-Aufbau (1) auf der Ladeplattform (51) des Transportfahrzeugs (5) angeordnet sind.

## Claims

1. Transporting and loading system for rail-supported conveyances using transport vehicles outfitted with a loading platform based on standardized ISO container dimensions and with standardized lock elements, including
- at least one rectangular frame (12) in the form of a floor assembly (11) conforming to ISO container format having two long sides and two short sides and four ISO container corners (14),
- a loading and offloading unit allowing goods to be loaded past at least one short side of the rectangular frame (12),
**characterized in that**
- the transporting and loading system includes a sandwich construction (1) comprising in a mirror-inverted manner at least two floor assemblies (11) which conform to ISO container format, wherein the floor assemblies (11) having the frame (12) and a base plate (13) are rigidly connected by container corners (14) arranged one directly above the other,
- there is provided between the two connected floor assemblies (11) of the sandwich construction (1) an intermediate space (15) in which are arranged drive units, transmission units and control units for the automated movement of the loading and offloading unit (2, 3; 8; 91, 92, 93, 99), and
- rails (6) are provided for holding and guiding rail-supported conveyances (47) on an upper base plate (13) of the sandwich construction (1) in longitudinal direction of the frame (12) and are aligned parallel to one another.

2. Transporting and loading system according to claim 1, **characterized in that** the loading and offloading unit is formed as a linear slide-out device (2) which is arranged in the intermediate space (15) between the two connected floor assemblies (11) and has at least two linear guides (21) which can move out telescopically parallel to the long sides of the rectangular frames (12) and include at least one linear drive (22) which is arranged symmetrically and parallel thereto, and forms on at least one of the short sides of the two frames (11) of the sandwich construction (1) a supporting structure comprising upper base plate (13) of the sandwich construction (1) and an end plate (24) which closes the slide-out device (2).

3. Transporting and loading system according to claim 2, **characterized in that** the slide-out device (2) has four linear guides (21) and two linear drives (22), wherein the linear drives (22) are arranged in each instance between two linear guides (21) which are arranged in pairs.

4. Transporting and loading system according to claim 2, **characterized in that** a bridge element (23), which is provided for bridging an open area resulting when the slide-out device (2) is moved out and for lengthening at least the guide for rail-supported conveyances (47) which is produced by the rails (6) on the base plate (13), is fixably arranged at the supporting structure formed of base plate (13) and end plate (24).

5. Transporting and loading system according to claim 2, **characterized in that** a collapsible ramp (3) having a foldable ramp portion (31) and a collapsible ramp portion (32) is additionally fastened to the end plate (24) of the slide-out device (2) and can be folded out as an incline by means of which a difference in height between the base plate (13) of the sandwich construction (1) and the ground level on which the transport vehicle (5) conveying the sandwich construction (1) stands is bridged in such a way that rail-supported conveyances (47) can be rolled on and off.

6. Transporting and loading system according to claim 5, **characterized in that** a vertically movable height adjustment means (25) for the collapsible ramp (3) is arranged at the end plate (24) of the slide-out device (2) such that a connection level of the ramp (3) corresponding to the upper base plate (13) of the sandwich construction (1) can be adapted to the level of an inner floor surface of an ISO container (4) which is placed on the sandwich construction (1).

7. Transporting and loading system according to claim 5, **characterized in that** the collapsible ramp (3) comprises two separate track portions being aligned in parallel, outfitted with rails (6), and movable synchronously with one another.

8. Transporting and loading system according to claim 7, **characterized in that** swivel bearings (63) for swivelable rail portions (62) are arranged at an upper end of the collapsible ramp portion (32) of the ramp (3), which swivel bearings (63) are arranged medially at the parallel track portions of the collapsible ramp portion (32) so that the rail portions (62) are swivelable laterally over the surface of the collapsible ramp portion (32) and, when the ramp (3) is folded out, form rail ends that can be adapted to a curve of a track installation (7).

9. Transporting and loading system according to claim 8, **characterized in that** the swivelable rail portions (62) have rail extensions (64) which can be folded out by a folding joint (65) in a plane perpendicular to the track installation (7), wherein the rail extensions (62) have ends which lie directly on the track installation (7) and which are provided with means for guiding the rail extensions (64) and the swivelable rail portions (62) at the rails of the track installation (7).

10. Transporting and loading system according to claim 5, **characterized in that** the collapsible ramp (3) has foldout supports (33; 34) on at least one respective end of the foldable ramp portion (61) and collapsible ramp portion (62).

11. Transporting and loading system according to claim 1, **characterized in that** a telescopic boom (8) is arranged as loading and offloading unit on the upper base plate (13) of the sandwich construction (1, wherein the telescopic boom (8) has two telescopic arms and linear drives (22) which are respectively arranged in parallel at the long sides of the rectangular frame (12) of the sandwich construction (1).

12. Transporting and loading system according to claim 11, **characterized in that** at least one portion of the upper floor assembly (11) of the sandwich construction (1) is bearing-mounted so as to be rotatable around a perpendicular axis of rotation, wherein the rotatable portion has the telescopic boom (8) provided as loading and offloading unit.

13. Transporting and loading system according to claim 1, **characterized in that** a supporting framework (91; 92, 93) as loading and offloading unit is longitudinally movably arranged on the upper base plate (13) of the sandwich construction (1, 9), wherein the supporting framework (91) is movable along the long sides of the sandwich construction in guide profiles (94; 97) over the entire length of the sandwich construction (1; 9), wherein a parallelogram arrangement (98) of linear drives (22) connected to a depositing box (99) for receiving the rail-supported conveyance (47) is movably arranged at the supporting framework (91; 92, 93) such that a movement to load and offload the depositing box (99) is made up of a horizontal loading and offloading step and a vertical loading and offloading step.

14. Use of the transporting and loading system according to claim 1 on a transport vehicle (5) with three ISO container spaces, wherein the sandwich construction (1; 9) is arranged at a rear end of the loading platform (51) of the transport vehicle (5), an ISO container (42) which is modified for receiving rail-supported conveyances (47) is arranged in the middle, and an ISO container (43) which is modified for the supplying of the sandwich construction (1; 9) is arranged at a front end of the loading platform (51) of the transport vehicle (5).

15. Use of the transporting and loading system according to claim 1 on a transport vehicle (5) with two ISO container spaces, wherein the sandwich construction (1; 9) is placed at a rear end of the loading platform (51) of the transport vehicle (5), an ISO container (42) which is modified for receiving rail-supported conveyances (47) is placed on the sandwich construction (1), and an ISO container (43) which is modified for the supplying of the sandwich construction (1) is arranged in front of the sandwich construction (1) on the loading platform (51) of the transport vehicle (5).

## Revendications

1. Système de transport et de chargement pour des véhicules ferroviaires en utilisant des véhicules de transport équipés d'une plate-forme de chargement reposant sur des dimensions standardisées de conteneurs ISO et d'éléments de verrouillage standardisés, contenant
- au moins un cadre (12) rectangulaire sous la forme d'un assemblage de plancher (11) conforme au format de conteneur ISO ayant deux côtés longs et deux côtés courts et quatre coins de conteneur (14) ISO,
- une unité de chargement et de déchargement permettant de charger des biens au-delà d'au moins un côté court du cadre (12) rectangulaire,
**caractérisé en ce que**
- le système de transport et de chargement contient une structure en sandwich (1) composée en manière inversée d'au moins deux assemblages de plancher (11) conforme au format de conteneur ISO, les assemblages de plancher (11) ayant le cadre (12) et une plaque de base (13) étant reliés de façon rigide par des coins de conteneur (14) disposés directement l'un au-dessus de l'autre,
- il est prévu entre les deux assemblages de plancher (11) reliés de la structure en sandwich (1) un interstice (15) dans lequel sont disposées des unités d'entraînement, de transmission et de commande pour le déplacement automatisé de l'unité de chargement et de déchargement (2, 3; 8; 91, 92, 93, 99), et
- des rails (6) sont prévus pour supporter et guider des véhicules ferroviaires (47) sur une plaque de base (13) supérieure de la structure en sandwich (1) en direction longitudinale du cadre (12) et sont alignés parallèlement l'un à l'autre.

2. Système de transport et de chargement selon la revendication 1, **caractérisé en ce que** l'unité de chargement et de déchargement est formée en tant que dispositif de glissière (2) linéaire qui est disposé dans l'interstice (15) entre les deux assemblages de plancher (11) reliés et a au moins deux guidages linéaires (21) qui peuvent se déplacer de manière télescopique parallèlement aux côtés longs des cadres (12) rectangulaires et contiennent au moins un entraînement linéaire (22) qui est disposé symétriquement et parallèlement aux guidages linéaires (21), et forme sur au moins un des côtés courts des deux cadres (11) de la structure en sandwich (1) une structure de support composée de plaque de base (13) supérieure de la structure en sandwich (1) et d'une plaque d'extrémité (24) qui ferme le dispositif de glissière (2).

3. Système de transport et de chargement selon la revendication 2, **caractérisé en ce que** le dispositif de glissière (2) a quatre guidages linéaires (21) et deux entraînements linéaires (22), les entraînements linéaires (22) étant disposés à chaque fois entre deux guidages linéaires (21) qui sont disposés par paires.

4. Système de transport et de chargement selon la revendication 2, **caractérisé en ce qu'**un élément de pont (23), qui est prévu pour combler une zone ouverte résultant quand le dispositif de glissière (2) est déplacé et pour allonger au moins le guidage pour des véhicules ferroviaires (47) qui est produit par les rails (6) sur la plaque de base (13), est disposé de manière à pouvoir être fixé à la structure de support formée de plaque de base (13) et plaque d'extrémité (24).

5. Système de transport et de chargement selon la revendication 2, **caractérisé en ce qu'**une rampe (3) pliable ayant une section de rampe rabattable (31) et une section de rampe pliable (32) est en plus fixée à la plaque d'extrémité (24) du dispositif de glissière (2) et peut être rabattue comme une pente au moyen duquel est comblée une différence de hauteur entre la plaque de base (13) de la structure en sandwich (1) et le niveau du sol, sur lequel est placé le véhicule de transport (5) transportant la structure en sandwich (1), de telle manière que des véhicules ferroviaires (47) peuvent être roulés en haut et en bas.

6. Système de transport et de chargement selon la revendication 5, **caractérisé en ce qu'**un moyen d'ajustement en hauteur (25) déplaçable verticalement pour la rampe (3) pliable est disposé à la plaque d'extrémité (24) du dispositif de glissière (2) de manière qu'un niveau de connexion de la rampe (3) correspondant à la plaque de base (13) supérieure de la structure en sandwich (1) peut être adapté au niveau d'une surface de sol intérieure d'un conteneur ISO (4) qui est placé sur la structure en sandwich (1).

7. Système de transport et de chargement selon la revendication 5, **caractérisé en ce que** la rampe (3) pliable comprend deux sections de voie séparées alignées parallèlement, équipées de rails (6) et déplaçables de manière synchrone entre eux.

8. Système de transport et de chargement selon la revendication 7, **caractérisé en ce que** des paliers de pivotement (63) pour des sections de rail pivotantes (62) sont disposés à une extrémité supérieure de la section de rampe pliable (32) de la rampe (3), les paliers de pivotement (63) étant disposés au centre des sections de voie parallèles de la section de rampe pliable (32) de telle façon que les sections de rail (62) peuvent être pivotées latéralement sur la surface de la section de rampe pliable (32) et, quand la rampe (3) est rabattue, forment des extrémités de rail qui peuvent être adaptées à la courbe d'une installation de voie (7).

9. Système de transport et de chargement selon la revendication 8, **caractérisé en ce que** les sections de rail pivotantes (62) ont des rallonges de rail (64) qui peuvent être rabattues par une articulation rabattable (65) dans un plan perpendiculaire à l'installation de voie (7), les rallonges de rail (62) ayant des extrémités qui sont situées directement sur l'installation de voie (7) et qui sont prévues de moyens pour guider les rallonges de rail (64) et les sections de rail pivotantes (62) aux rails de l'installation de voie (7).

10. Système de transport et de chargement selon la revendication 5, **caractérisé en ce que** la rampe (3) pliable a des supports rabattables (33; 34) à au moins une extrémité respective de la section de rampe rabattable (61) et de la section de rampe pliable (62).

11. Système de transport et de chargement selon la revendication 1, **caractérisé en ce qu'**une flèche télescopique (8) est disposée en tant que unité de chargement et de déchargement sur la plaque de base (13) supérieure de la structure en sandwich (1), la flèche télescopique (8) ayant deux bras télescopiques et entraînements linéaires (22) qui sont disposés à chaque fois parallèlement aux côtés longs du cadre (12) rectangulaire de la structure en sandwich (1).

12. Système de transport et de chargement selon la revendication 11, **caractérisé en ce qu'**au moins une partie de l'assemblage de plancher (11) supérieur de la structure en sandwich (1) est montée de manière à pouvoir tourner autour d'un axe de rotation perpendiculaire, la partie rotative ayant la flèche télescopique (8) prévue en tant que unité de chargement et de déchargement.

13. Système de transport et de chargement selon la revendication 1, **caractérisé en ce qu'**un bâti de support (91; 92, 93) en tant que unité de chargement et de déchargement est disposé de manière déplaçable longitudinalement sur la plaque de base (13) supérieure de la structure en sandwich (1, 9), le bâti de support (91) étant déplaçable le long des côtés longs de la structure en sandwich dans des profiles de guidage (94; 97) sur toute la longueur de la structure en sandwich (1; 9), un arrangement de parallélogramme (98) d'entraînements linéaires (22) reliés à une boite de dépôt (99) pour recevoir le véhicule ferroviaire (47) étant disposé de manière déplaçable au bâti de support (91; 92, 93) de telle manière qu'un mouvement pour charger et décharger la boite de dépôt (99) est composé d'une étape horizontale de chargement et déchargement et d'une étape verticale de chargement et déchargement.

14. Usage d'un système de transport et de chargement selon la revendication 1 sur un véhicule de transport (5) avec trois emplacements de conteneur ISO, la structure en sandwich (1; 9) étant disposée à une extrémité arrière de la plate-forme de chargement (51) du véhicule de transport (5), un conteneur ISO (42) qui est modifié pour recevoir des véhicules ferroviaires (47) est disposé au milieu, et un conteneur ISO (43) qui est modifié pour l'alimentation de la structure en sandwich (1; 9) est disposé à une extrémité avant de la plate-forme de chargement (51) du véhicule de transport (5).

15. Usage d'un système de transport et de chargement selon la revendication 1 sur un véhicule de transport (5) avec deux emplacements de conteneur ISO, la structure en sandwich (1; 9) étant placée à une extrémité arrière de la plate-forme de chargement (51) du véhicule de transport (5), un conteneur ISO (42) qui est modifié pour recevoir des véhicules ferroviaires (47) est placé sur la structure en sandwich (1), et un conteneur ISO (43) qui est modifié pour l'alimentation de la structure en sandwich (1) est disposé devant la structure en sandwich (1) sur la plate-forme de chargement (51) du véhicule de transport (5).
